# EUROPEAN PATENT APPLICATION

(11) **EP 4 213 574 A1**
(43) Date of publication of application: **19.07.2023**
(21) Application number: 21874436.5
(22) Date of filing: 27.09.2021
(51) Int. Cl.: H04W 74/08, H04W 36/08

(54) **RANDOM ACCESS METHOD AND APPARATUS, AND RELATED DEVICE**

(30) Priority: 29.09.2020 CN 202011053370
(71) Applicant: Vivo Mobile Communication Co., Ltd., Dongguan, Guangdong 523863 (CN)
(72) Inventor: CHEN, Li, Dongguan, Guangdong 523863 (CN)
(74) Representative: Murgitroyd & Company
(86) International application number: PCT/CN2021/121024
(87) International publication number: WO 2022/068776

(57) **Abstract**

This application relates to the field of communications technologies. A random access method and an apparatus, and a related device are disclosed. The random access method includes: performing a first operation in a case of moving in at least one single frequency network SFN during execution of a first random access channel RACH process performed by a terminal, where the first operation includes any one of the following: continuing performing the first RACH process; ending the first RACH process and starting to perform a second RACH process; or ending the RACH process.

## Description

### CROSS-REFERENCE TO RELATED APPLICATIONS

This application claims priority of Chinese Patent Application No. 202011053370.3 filed in China on September 29, 2020, which is incorporated herein by reference in its entirety.

### TECHNICAL FIELD

This application relates to the field of mobile communications technologies, and in particular, to a random access method and an apparatus, and a related device.

### BACKGROUND

As a frequency band is increasingly higher in deployment of a future communication system, coverage of a single cell (cell) or transmission reception point (Transmission Reception Point, TRP) is increasingly smaller, and the future communication system supports more high-speed scenarios. As a result, a terminal has frequent mobility, which introduces more terminal measurements and causes higher power consumption of the terminal.

To reduce power consumption of the terminal, a cell free (cell free) or single frequency network (Single Frequency Network, SFN) may be an important deployment scenario in a dense network (Dense Network) or high-speed scenario. However, in the related art, there is no related solution on how to perform a random access channel (Random Access Channel, RACH) process in a case that an SFN design is introduced.

### SUMMARY

Embodiments of this application provide a random access method and an apparatus, and a related device, which can implement a RACH process in a case that an SFN design is introduced.

According to a first aspect, a random access method is provided, performed by a terminal, the method including:
performing a first operation in a case of moving in at least one single frequency network SFN during execution of a first random access channel RACH process performed by the terminal, where
the first operation includes any one of the following:
   continuing performing the first RACH process;
   ending the first RACH process and starting to perform a second RACH process; or
   ending the RACH process.

According to a second aspect, a random access method is provided, performed by a network side device, the method including:
performing a first operation in a case of moving in at least one single frequency network SFN during execution of a first random access channel RACH process performed by a terminal, where
the first operation includes any one of the following:
   continuing performing the first RACH process;
   ending the first RACH process and starting to perform a second RACH process; or
   ending the RACH process.

According to a third aspect, a random access apparatus is provided, including:
a first execution module, configured to perform a first operation in a case of moving in at least one single frequency network SFN during execution of a first random access channel RACH process performed by a terminal, where
the first operation includes any one of the following:
   continuing performing the first RACH process;
   ending the first RACH process and starting to perform a second RACH process; or
   ending the RACH process.

According to a fourth aspect, a random access apparatus is provided, including:
a fourth execution module, configured to perform a first operation in a case of moving in at least one single frequency network SFN during execution of a first random access channel RACH process performed by a terminal, where
the first operation includes any one of the following:
   continuing performing the first RACH process;
   ending the first RACH process and starting to perform a second RACH process; or
   ending the RACH process.

According to a fifth aspect, a communication device is provided, including a processor, a memory, and a program or instructions stored in the memory and executable on the processor, the program or instructions, when executed on the processor, implementing steps of the method according to the first aspect, or implementing steps of the method according to the second aspect.

According to a sixth aspect, a readable storage medium is provided, the readable storage medium storing a program or instructions, the program or instructions, when executed on a processor, implementing steps of the method according to the first aspect, or implementing steps of the method according to the second aspect.

According to a seventh aspect, a chip is provided, including a processor and a communication interface, the communication interface being coupled to the processor, and the processor being configured to run a program or instructions of a network side device to implement the method according to the first aspect, or implement the method according to the second aspect.

According to an eighth aspect, a software product is provided, stored in a non-volatile storage medium and configured to be executed on at least one processor to implement steps of the method according to the first aspect, or implement steps of the method according to the second aspect.

According to a ninth aspect, a communication device is provided, the communication device being configured to perform the method according to the first aspect, or perform the method according to the second aspect.

In the embodiments of this application, if the terminal moves in at least one SFN in a case of performing a first RACH process, the terminal or the network side device may perform a first operation, where the first operation includes any one of the following: continuing performing the first RACH process; ending the first RACH process and starting to perform a second RACH process; or ending the RACH process. In view of the above, the embodiments of this application provide a solution for implementing a RACH process in an SFN scenario. The RACH process is effectively combined with an SFN, to quickly access to a network, thereby effectively reducing power consumption and an access delay of the terminal.

### BRIEF DESCRIPTION OF THE DRAWINGS

FIG. 1 is a block diagram of a wireless communication system to which an embodiment of this application is applicable.
FIG. 2 is a schematic diagram of a single frequency network (SFN) according to an embodiment of this application.
FIG. 3 is a schematic diagram of a dense network according to an embodiment of this application.
FIG. 4a is a first schematic diagram of a random access process according to an embodiment of this application.
FIG. 4b is a second schematic diagram of a random access process according to an embodiment of this application.
FIG. 5 is a first flowchart of a random access method according to an embodiment of this application.
FIG. 6 is a second flowchart of a random access method according to an embodiment of this application.
FIG. 7 is a first structural diagram of a random access apparatus according to an embodiment of this application.
FIG. 8 is a second structural diagram of a random access apparatus according to an embodiment of this application.
FIG. 9 is a structural diagram of a communication device according to an embodiment of this application.
FIG. 10 is a structural diagram of a terminal according to an embodiment of this application.
FIG. 11 is a structural diagram of a network side device according to an embodiment of this application.

### DETAILED DESCRIPTION

The following clearly and completely describes the technical solutions in the embodiments of this application with reference to the accompanying drawings in the embodiments of this application. Apparently, the described embodiments are some rather than all of the embodiments of this application. All other embodiments obtained by a person skilled in the art based on the embodiments of this application without creative efforts shall fall within the protection scope of this application.

In the specification and the claims of this application, the terms such as "first" and "second", are intended to distinguish similar objects but do not necessarily indicate a specific order or sequence. It is to be understood that the data termed in such a way is interchangeable in proper circumstances, so that the embodiments of this application can be implemented in other sequences than the sequence illustrated or described herein. In addition, the objects distinguished by "first", "second", and the like are usually of one type, and a quantity of objects is not limited, for example, there may be one or more first objects. In addition, "and/or" used in the specification and the claims represents at least one of the connected objects, and a character "/" in this specification generally indicates an "or" relationship between the associated objects.

It is to be noted that, the technologies described in the embodiments of this application are not limited to a long term evolution (Long Term Evolution, LTE)/LTE-Advanced (LTE-Advanced, LTE-A) system, or may be applied to other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-Carrier Frequency-Division Multiple Access, SC-FDMA), and another system. In the embodiments of this application, the terms "system" and "network" are usually interchangeably used, and the technology described herein can be applied to the systems and radio technologies mentioned above, and can also be applied to other systems and radio technologies. However, although the technologies are also applicable to applications other than NR system applications, for example, a 6^{th} generation (6^{th} Generation, 6G) communication system, a new radio (NR) system is exemplarily described in the following descriptions, and the term "NR" is used in most of the following descriptions.

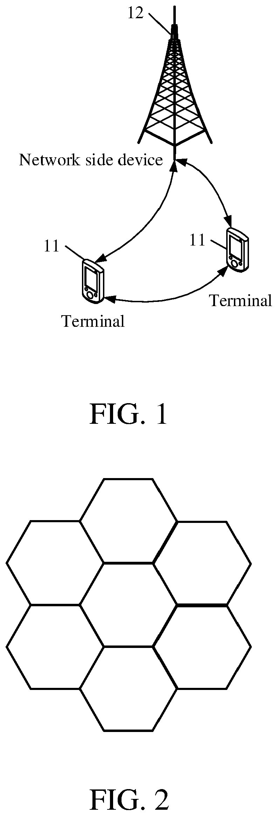

FIG. 1 shows a block diagram of a wireless communication system to which an embodiment of this application is applicable. The wireless communication system includes a terminal 11 and a network side device 12. However, the terminal 11 may also be referred to as a terminal device or a user equipment (User Equipment, UE). The terminal 11 may be a terminal side device such as a mobile phone, a tablet personal computer (Tablet Personal Computer), a laptop computer (Laptop Computer) or notebook computer, a Personal Digital Assistant (Personal Digital Assistant, PDA), a palmtop computer, a notebook, an ultra-mobile personal computer (ultra-mobile personal computer, UMPC), a Mobile Internet Device (Mobile Internet Device, MID), a wearable device (Wearable Device), a vehicle user equipment (VUE), a pedestrian user equipment (PUE), or the like. The wearable device includes a bracelet, a headset, glasses, and the like. It is to be noted that, the specific type of the terminal 11 is not limited in the embodiments of this application. The network side device 12 may be a base station or a core network. The base station may be referred to as a node B, an evolved node B (evolved Node B, eNB), an access point, a base transceiver station (Base Transceiver Station, BTS), a radio base station, a radio transceiver, a basic service set (Basic Service Set, BSS), an extended service set (Extended Service Set, ESS), a home node B, a home evolved node B, a wireless local area network (wireless local area network, WLAN) access point, a wireless fidelity (wireless fidelity, WiFi) node, a TRP, or another suitable term in the field. The base station is not limited to a specific technical term as long as the same technical effect is achieved.

For ease of understanding, content involved in the embodiments of the present invention is described below.

### 1. SFN

SFN transmission solution: A plurality of cells or a plurality of sending points send same signals, there is no intra-frequency interference between different cells, and a plurality of signals may improve a signal to interference plus noise ratio (Signal to Interference plus Noise Ratio, SINR), transmission quality, and a coverage effect.

A plurality of cells constituting an SFN may share a cell ID, that is, an ID of a super cell (super cell). Therefore, the SFN may also be referred to as a super cell in some cases. Referring to FIG. 2, FIG. 2 shows an SFN including 7 cells, that is, the super cell.

The plurality of cells may send a signal through SFN transmission. For example, each cell sends a signal with a wide beam, and the terminal may receive wide beams sent by the plurality of cells at a moment, to obtain a diversity gain. In the SFN transmission solution, the terminal does not need to frequently reselect or switch the cells.

### 2. IDLE or INACTIVE UE mobility

During movement of an IDLE or INACTIVE UE, a network provides a priority of each frequency.

For an intra-frequency neighboring cell, if a measurement evaluation value of a target (or neighboring) cell (which is calculated by adding an offset to the measurement result of the target (or neighboring) cell) is better than a measurement evaluation value of a serving cell (which is calculated by adding an offset to the measurement result of the serving cell) and lasts for a duration (for example, a duration configured by the network), and the UE camps on a current serving cell for more than a duration (for example, 1s as specified in a protocol), the UE reselects the target (or neighboring) cell.

For a high-priority inter-frequency (inter-frequency) or inter Radio Access Technology (inter Radio Access Technology, inter-RAT) neighboring cell, if a measurement evaluation value of a target (or neighboring) cell is greater than a threshold and lasts for a duration (for example, a duration configured by the network), the UE reselects the target (or neighboring) cell.

For a low-priority inter-frequency or inter-RAT neighboring cell, if a measurement evaluation value of a target (or neighboring) cell is greater than a threshold while a measurement evaluation value of a current serving cell is less than the threshold, and the measurement evaluation value lasts for a duration (for example, a duration configured by the network), the UE reselects the target (or neighboring) cell.

For an inter-frequency or inter-RAT neighboring cell, when a priority of a target (or neighboring) frequency is the same as a priority of a current serving (or camped-on) frequency, a cell reselection method is the same as the cell reselection method for the intra-frequency cell.

The IDLE/INACTIVE UE triggers a connection establishment process by receiving a paging message from the network side device, to transmit and receive data.

### 3. Cell free or dense network

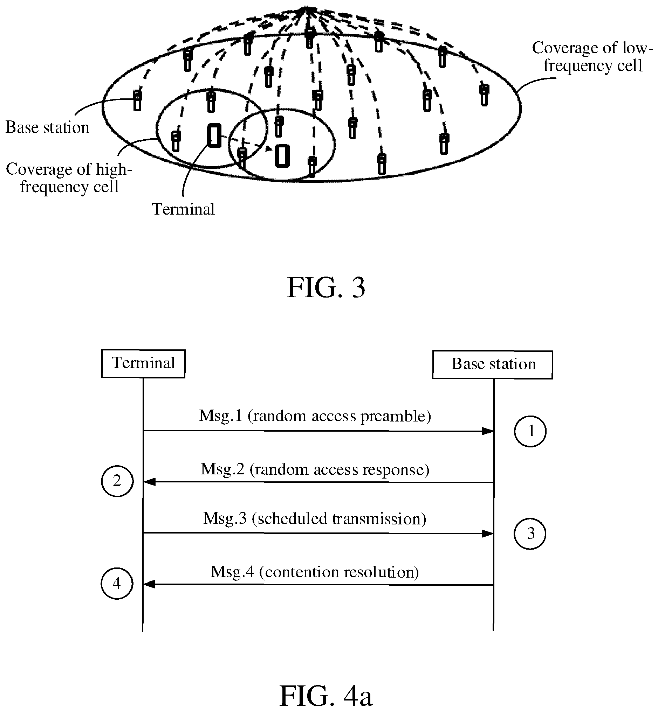

As shown in FIG. 3, a low-frequency (for example, FR1) cell has larger coverage than a high-frequency (for example, FR2) cell. When the terminal moves in FR1 coverage, the FR2 cell may be continuously switched while the FR1 cell is not switched.

When initially activating an FR2 cell or switching an FR2 cell, the terminal needs to continuously measure signal quality of each beam. Since there is a large quantity of beams, it may take an excessively long time to activate a cell or switch a cell. For example, when a specific condition is met, a measurement time may reach a second level, and the long measurement time may cause larger power consumption of the UE.

### 4. Centralized unit (Centralized Unit, CU) and Distributed Unit (Distributed Unit, DU)

In a 5th-Generation (5th-Generation, 5G) system, a base station (gNB) may place protocol stack entities on different control units. For example, radio resource control (Radio Resource Control, RRC) and a packet data convergence protocol (Packet Data Convergence Protocol, PDCP) are placed on the CU, and radio link control (Radio Link Control, RLC) and Media Access Control (Media Access Control, MAC)/a physical (Physical, PHY) layer are placed on the DU. The CU and the DU have a specific radio resource management permission. For example, the CU may manage cells connected to the CU through an RRC message, and the DU may manage cells connected to the DU through a MAC control element (Control Element, CE) message. A plurality of DUs are connected to one CU, and the CU is connected to a core network and other CUs.

### 5. Basic procedure of terminal system access

The procedure may include the following steps:
Step 1: Perform initial network searching: including synchronizing a synchronization signal and PBCH block (Synchronization Signal and PBCH block, SSB) and receiving system information.
   Specifically, a primary synchronization signal (Primary Synchronization Signal, PSS) may be first received, a secondary synchronization signal (Secondary Synchronization Signal, SSS) may be received, and then a physical broadcast channel (Physical Broadcast Channel, PBCH) may be received, to obtain an SSB index (index), a demodulation reference signal (Demodulation Reference Signal, DMRS) of the PBCH, and information in a master information block (Master Information Block, MIB).
Step 2: Receive broadcast system information (system information, SI) according to the received information, where the system information includes information required for system access.
Step 3: Perform random access according to the obtained information required for system access.

### 6. Random Access Channel (Random Access Channel, RACH) process

A current RACH process is divided into a contention-based random access process and a non-contention-based random access process. The contention-based random access process is a 4-step access process, namely, message (Message, Msg.) 1 access to Msg.4 access, but the non-contention-based random access process includes only 2 steps, namely, Msg.1 access and Msg.2 access.

As shown in FIG. 4a, the contention-based random access process may include the following steps:
Step 1: The UE sends a Msg.1 to an eNB.
   The Msg.1 may include a random access preamble (Random Access Preamble).
Step 2: The eNB sends a Msg.2 to the UE.
   The Msg.2 may include a random access response (Random Access Response, RAR).
Step 3: The UE sends a message3 to an eNB.
   The Msg.3 may include scheduled transmission (Scheduled Transmission).
Step 4: The eNB sends a Msg.4 to the UE.

The Msg.4 may include contention resolution (Contention Resolution).

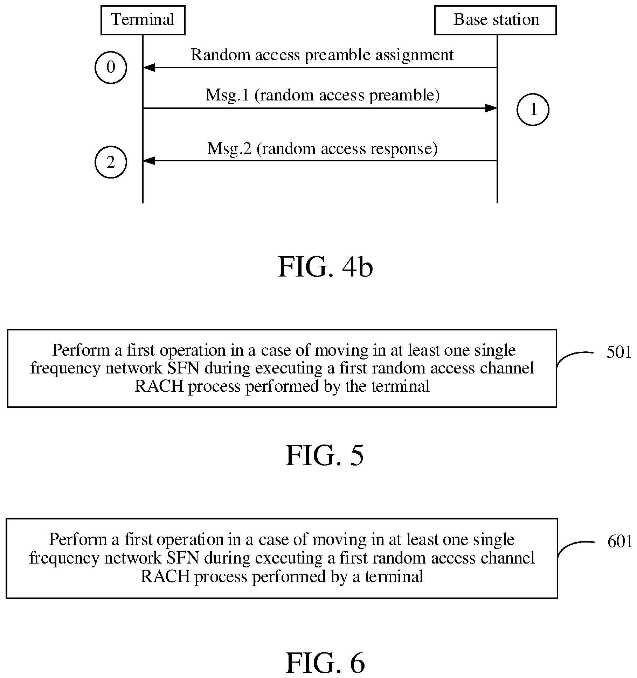

As shown in FIG. 4b, the non-contention-based random access process may include the following steps:
Step 0: The eNB sends random access preamble assignment (Random Access Preamble Assignment) to the UE.
Step 1: The UE sends a Msg.1 to an eNB.
   The Msg.1 may include a random access preamble.
Step 2: The eNB sends a message2 to the UE.
   The Msg.2 may include a random access response.

Both the Msg.2 in the contention-based random access process and the Msg.2 in the non-contention-based random access process send the RAR. The UE listens to an RAR corresponding to a random access-radio network temporary identifier (Random Access-Radio Network Temporary Identifier, RA-RNTI) in an RAR window.

In the contention-based random access process, there is also a problem that the UE sends a same preamble on a same PRACH resource. Therefore, after receiving the Msg.2, the UE further needs to send the Msg.3 according to an uplink grant (UpLink grant, UL grant) on the Msg.2, and the UE may carry an identifier of the UE on the message3 and activate a contention resolution timer (timer) while sending the Msg.3. If the Msg.4 sent by the base station is received before expiration of the contention resolution timer, the UE succeeds in contention resolution. In the Msg.4, the base station may carry a UE identifier. The UE may determine, according to the UE identifier carried on the message4, whether the message4 belongs to the UE, thereby determining whether the contention is successful.

Further, to reduce a delay of accessing a system, a 2-step RACH process is introduced, that is, a RACH process including two steps: sending, by the terminal, a Msg.A to the network side, and receiving a Msg.B delivered by the network side. The Msg.A has functions of the Msg.1 and the Msg.3 in FIG. 4a, and the Msg.B has functions of the Msg.2 and the Msg.4 in FIG. 4a. Alternatively, the Msg.A has a function of the Msg.1 in FIG. 4b, and the Msg.B has a function of the Msg.2 in FIG. 4b.

In this embodiment of this application, SFN specific (SFN specific) may be understood as that: a related configuration corresponding to each SFN is independent, and configurations in an SFN range are the same. Cell or TRP specific may also be referred to as: corresponding to SFN, Super cell specific, corresponding to the Super cell, or corresponding to a first layer. The first layer is an SFN layer.

Cell or TRP specific (Cell/TRP specific) may be understood as that: a related configuration corresponding to each Cell/TRP is independent, and configurations in a Cell/TRP range are the same. Cell or TRP specific may also be referred to as: corresponding to a cell or TRP, or corresponding to a second layer. The second layer is a cell layer or a TRP layer.

The reference signal (Reference Signal, RS) may be represented as any one of the following: reference signals such as an SSB, a channel state information (Channel State Information, CSI)-RS, a cell specific RS (Cell specific RS, CRS), a sounding reference signal (Sounding Reference Signal, SRS), or a demodulation reference signal (Demodulation Reference Signal, DMRS).

Specifically, during actual deployment, the SFN is a range of the Super cell. An SFN range includes a plurality of cells or TRPs, and an SFN super cell is generally referred to as an SFN layer. A cell corresponding to the Super cell or the SFN layer is an SFN specific (specific) cell. The plurality of cells or TRPs included in the SFN range are cell/TRP layers. A cell/TRP corresponding to the layer is a cell/TRP specific (specific) cell or TRP. Correspondingly, a reference signal RS, a system information SI, a paging message Paging, and the like on the SFN layer are referred to as an SFN specific RS (a specific RS of an SFN), SI, paging, and the like. A reference signal RS, a system information SI, a paging message Paging, and the like on the cell/TRP layer are referred to as a cell/TRP specific RS (a specific RS of a TRP), SI, paging, and the like.

Referring to FIG. 5, FIG. 5 is a first flowchart of a random access method according to an embodiment of this application. The random access method in this embodiment of this application may be performed by a terminal.

As shown in FIG. 5, the random access method may include the following steps:

Step 501: Perform a first operation in a case of moving in at least one single frequency network SFN during execution of a first random access channel RACH process performed by the terminal.

In this embodiment of the present disclosure, the first operation may include any one of the following:
continuing performing the first RACH process;
ending the first RACH process and starting to perform a second RACH process; or
ending the RACH process.

In a scenario in which the first operation includes continuing performing the first RACH process, the terminal may continue performing the first RACH process even if the terminal moves in at least one SFN in a case of performing the first RACH process. In this case, the RACH process performed by the terminal may not be suspended due to movement of the terminal, thereby improving smoothness of random access.

In a scenario in which the first operation includes ending the first RACH process and starting to perform a second RACH process, if the terminal moves in at least one SFN in a case of performing the first RACH process, the terminal may restart the RACH process, that is, end a RACH process that is currently performed, and start to perform a new RACH process, thereby improving reliability of random access.

In a scenario in which the first operation includes ending the RACH process, if the terminal moves in at least one SFN in a case of performing the first RACH process, the terminal may end all RACH processes including the first RACH process, thereby reducing power consumption of the terminal.

In the random access method in this embodiment of this application, if the terminal moves in at least one SFN in a case of performing a first RACH process, the terminal may perform a first operation, where the first operation includes any one of the following: continuing performing the first RACH process; ending the first RACH process and starting to perform a second RACH process; or ending the RACH process. In view of the above, the embodiments of this application provide a solution for implementing a RACH process in an SFN scenario. The RACH process is effectively combined with an SFN, to quickly access to a network, thereby effectively reducing power consumption and an access delay of the terminal.

In this embodiment of this application, in an implementation, the terminal may perform the first operation as long as the terminal moves in at least one SFN in a case of performing a first RACH process.

In another implementation, in a case that the terminal moves in at least one single frequency network SFN in a case of performing a first random access channel RACH process, the terminal may perform the first operation only provided that a specific condition is met.

Optionally, performing the first operation includes:
performing the first operation in a case that a reference signal RS received by the terminal includes an SFN specific RS.

In this optional implementation, in a case that the terminal moves in at least one single frequency network SFN in a case of performing a first random access channel RACH process, further, the terminal may perform the first operation in a case of an RS received by the terminal includes an SFN specific RS.

During specific implementation, that an RS received by the terminal includes an SFN specific RS may include at least one of the following: the RS received by the terminal includes an SFN specific RS and a cell/TRP specific RS; or the RS received by the terminal includes only an SFN specific RS.

In this optional implementation, if the condition that an RS received by the terminal includes an SFN specific RS is not met, that is, the RS received by the terminal does not include the SFN specific RS, for example, the RS received by the terminal includes only a cell/TRP specific RS, the terminal may not perform the first operation even if the terminal moves in at least one single frequency network SFN in a case of performing a first random access channel RACH process. In this case, optionally, the terminal may implement object change according to a measurement result of the RS; and/or the terminal may select a RACH resource according to a measurement result of the RS to perform random access. During specific implementation, object change may specifically be expressed as any one of the following: object selection, object reselection, object switching (synchronous reconfiguration), or the like.

The SFN specific RS may also be an RS corresponding to the SFN.

The measurement result may include at least one of the following: a reference signal received power (Reference Signal Received Power, RSRP), reference signal received quality (Reference Signal Received Quality, RSRQ), a received signal strength indication (Received Signal Strength Indication, RSSI), a signal-to-noise and interference ratio (Signal-to-Noise and Interference Ratio, SINR), or a block error rate (Block Error Rate, BLER).

Optionally, in this embodiment of this application, moving in the at least one SFN includes any one of the following:
a) moving from a first object to a second object in a first SFN;
b) moving from a second SFN to a third SFN, and accessing, by the terminal, an SFN layer; or
c) moving from a third object in a fourth SFN to a fourth object in a fifth SFN, where
   the object includes any one of the following: an SFN specific cell (a specific cell of an SFN), a cell or transmission reception point TRP specific cell (a specific cell of a transmission reception point TRP), or a TRP.

In a), the terminal implements object change in the first SFN (range), that is, moving from the first object included in the first SFN to the second object included in the first SFN.

In b), the terminal implements SFN change, that is, moving from the second SFN to the third SFN. In this case, the terminal accesses the SFN layer (SFN layer), or does not access a cell/TRP layer (Cell/TRP layer). In other words, the terminal camps on or is connected to a cell on the SFN layer, or does not camp on or is not connected to a cell on the cell/TRP layer.

In c), the terminal implements object change between SFNs, that is, moving from the third object in the fourth SFN to the fourth object in the fifth SFN.

In this embodiment of this application, in a scenario in which the first operation includes continuing performing the first RACH process, a RACH resource used when the terminal continues performing the first RACH process and a RACH resource used when the terminal performs a first RACH process before moving in at least one SFN may be the same or different, which may be specifically determined according to an actual situation. This is not limited in this embodiment of this application.

Optionally, the continuing performing the first RACH process includes:
continuing performing the first RACH process according to a first RACH resource.

During specific implementation, optionally, the first RACH resource may be configured by using any one of the following: SFN specific system information (System Information, SI) or cell or TRP specific SI (specific SI of a cell or TRP).

As can be learned from the foregoing description, moving in the at least one SFN may be represented in a plurality of forms, and the RS received by the terminal may be represented in a plurality of forms. In this embodiment of this application, for moving in the at least one SFN with different representation forms and/or the RS received by the terminal with different representation forms, representation forms of the first RACH resource may be different, or may be the same. Detailed descriptions are as follows:
Case 1: Moving in the at least one SFN includes: moving from a first object to a second object in a first SFN.

In the case 1, the first RACH resource may be any one of the following: a RACH resource corresponding to the second object, a RACH resource corresponding to the first object, or a RACH resource associated with a specific RS of the first SFN. In other words, a RACH resource corresponding to a source object (that is, the first object), or a RACH resource corresponding to a target object (which is also referred to as a new object, that is, the second object), or a RACH resource associated with a specific RS of the SFN (that is, the first SFN) in which the terminal is located may be used for the terminal to continue performing the first RACH process.

Further, the first RACH resource meets any one of the following:
in a case that an RS received by the terminal includes a first RS and a second RS, and the first RS is not associated with a RACH resource, the first RACH resource is any one of the following: a RACH resource corresponding to the second object or a RACH resource corresponding to the first object;
in a case that an RS received by the terminal includes a first RS and a second RS, and the first RS is associated with a RACH resource, the first RACH resource is any one of the following: a RACH resource associated with a specific RS of the first SFN, a RACH resource corresponding to the second object, or a RACH resource corresponding to the first object; or
in a case that an RS received by the terminal includes only a first RS, and the first RS is associated with a RACH resource, the first RACH resource is a RACH resource associated with a specific RS of the first SFN, where
the object includes any one of the following: an SFN specific cell, a cell or TRP specific cell, or a TRP; and the first RS is an SFN specific RS, or the second RS is a cell or TRP specific RS.

During specific implementation, the first RACH resource may be specified in a protocol, configured by the network side device, or coordinated and determined by the first object and the second object, which may be specifically determined according to an actual situation. This is not limited in this embodiment of this application.

Case 2: Moving in the at least one SFN includes: moving from a second SFN to a third SFN, and accessing an SFN layer by the terminal.

In the case 2, since the terminal does not access the cell/TRP layer, the terminal cannot use object specific RACH resources. The first RACH resource may be any one of the following: a RACH resource configured by using target system information SI in the second SFN, a RACH resource configured by using target SI in the third SFN, a RACH resource associated with a specific RS of the second SFN, or a RACH resource associated with a specific RS of the third SFN. In other words, a RACH resource configured by using target SI in a source SFN (that is, the second SFN), or a RACH resource configured by using target SI in a target SFN (that is, the third SFN), or a RACH resource associated with a source SFN (that is, the second SFN) specific RS, or a RACH resource associated with a target SFN (that is, the third SFN) specific RS may be used for the terminal to continue performing the first RACH process.

Further, the first RACH resource meets any one of the following:
in a case that an RS received by the terminal includes a first RS and a second RS, and the first RS is not associated with a RACH resource, the first RACH resource is any one of the following: a RACH resource configured by using target system information SI in the second SFN or a RACH resource configured by using target SI in the third SFN; or
in a case that an RS received by the terminal includes a first RS, and the first RS is associated with a RACH resource, the first RACH resource is any one of the following: a RACH resource associated with a specific RS of the second SFN or a RACH resource associated with a specific RS of the third SFN, where
the first RS is an SFN specific RS, or the second RS is a cell or TRP specific RS; and the target SI is SFN specific SI (specific SI of an SFN) or cell or TRP specific SI.

During specific implementation, the first RACH resource may be specified in a protocol, configured by the network side device, or coordinated and determined by the second SFN and the third SFN, which may be specifically determined according to an actual situation. This is not limited in this embodiment of this application.

Case 3: Moving in the at least one SFN includes: moving from a third object in a fourth SFN to a fourth object in a fifth SFN.

In the case 3, the first RACH resource may be any one of the following: a RACH resource associated with a specific RS of the fourth SFN, a RACH resource associated with a specific RS of the fifth SFN, a RACH resource corresponding to the third object, or a RACH resource corresponding to the fourth object. In other words, a RACH resource corresponding to a source object (that is, the third object), or a RACH resource corresponding to a target object (which is also referred to as a new object, that is, the fourth object), or a RACH resource associated with a source SFN (that is, the fourth SFN) specific RS, or a RACH resource associated with a target SFN (that is, the fifth SFN) specific RS may be used for the terminal to continue performing the first RACH process.

Further, the first RACH resource meets any one of the following:
in a case that an RS received by the terminal includes a first RS and a second RS, and the first RS is not associated with a RACH resource, the first RACH resource is any one of the following: a RACH resource corresponding to the third object or a RACH resource corresponding to the fourth object;
in a case that an RS received by the terminal includes a first RS and a second RS, and the first RS is associated with a RACH resource, the first RACH resource is any one of the following: a RACH resource associated with a specific RS of the fourth SFN, a RACH resource associated with a specific RS of the fifth SFN, a RACH resource corresponding to the third object, or a RACH resource corresponding to the fourth object; or
in a case that an RS received by the terminal includes only a first RS, and the first RS is associated with a RACH resource, the first RACH resource is any one of the following: a RACH resource associated with a specific RS of the fourth SFN or a RACH resource associated with a specific RS of the fifth SFN, where
the object includes any one of the following: an SFN specific cell, a cell or TRP specific cell, or a TRP; and the first RS is an SFN specific RS, or the second RS is a cell or TRP specific RS.

During specific implementation, the first RACH resource may be specified in a protocol, configured by the network side device, or coordinated and determined by the third object and the fourth object, which may be specifically determined according to an actual situation. This is not limited in this embodiment of this application.

In this embodiment of this application, in a scenario in which the first operation includes ending the first RACH process and starting to perform a second RACH process, a RACH resource used when the terminal performs the second RACH process and a RACH resource used when the terminal performs a first RACH process before moving in at least one SFN may be the same or different, which may be specifically determined according to an actual situation. This is not limited in this embodiment of this application.

Optionally, starting to perform the second RACH process includes:
starting to perform the second RACH process according to a second RACH resource.

During specific implementation, optionally, the second RACH resource may be configured by using any one of the following: SFN specific system information (System Information, SI) or cell or TRP specific SI.

As can be learned from the foregoing description, moving in the at least one SFN may be represented in a plurality of forms, and the RS received by the terminal may be represented in a plurality of forms. In this embodiment of this application, for moving in the at least one SFN with different representation forms and/or the RS received by the terminal with different representation forms, representation forms of the second RACH resource may be different, or may be the same. Detailed descriptions are as follows:

Case 1: Moving in the at least one SFN includes moving from a first object to a second object in a first SFN.

In the case 1, the second RACH resource may be any one of the following: a RACH resource associated with a specific RS of the first SFN or a RACH resource corresponding to the second object. In other words, a RACH resource corresponding to a target object (which is also referred to as a new object, that is, the second object), or a RACH resource associated with a specific RS of the SFN (that is, the first SFN) in which the terminal is located may be used for the terminal to perform the second RACH process.

Further, the second RACH resource meets any one of the following:
in a case that an RS received by the terminal includes a first RS and a second RS, and the first RS is not associated with a RACH resource, the second RACH resource is a RACH resource corresponding to the second object;
in a case that an RS received by the terminal includes a first RS and a second RS, and the first RS is associated with a RACH resource, the second RACH resource is any one of the following: a RACH resource associated with a specific RS of the first SFN or a RACH resource corresponding to the second object; or
in a case that an RS received by the terminal includes only a first RS, and the first RS is associated with a RACH resource, the second RACH resource is a RACH resource associated with a specific RS of the first SFN, where
the object includes any one of the following: an SFN specific cell, a cell or TRP specific cell, or a TRP; and the first RS is an SFN specific RS, or the second RS is a cell or TRP specific RS.

During specific implementation, the first RACH resource may be specified in a protocol, configured by the network side device, or coordinated and determined by the first object and the second object, which may be specifically determined according to an actual situation. This is not limited in this embodiment of this application.

Case 2: Moving in the at least one SFN includes: moving from a second SFN to a third SFN, and accessing an SFN layer by the terminal.

In the case 2, since the terminal does not access the cell/TRP layer, the terminal cannot use object specific RACH resources. The second RACH resource may be any one of the following: a RACH resource configured by using target SI in the third SFN or a RACH resource associated with a specific RS of the third SFN. In other words, a RACH resource configured by using target SI in a target SFN (that is, the third SFN), or a RACH resource associated with a target SFN (that is, the third SFN) specific RS may be used for the terminal to perform the second RACH process.

Further, the second RACH resource meets any one of the following:
in a case that an RS received by the terminal includes a first RS and a second RS, and the first RS is not associated with a RACH resource, the second RACH resource is a RACH resource configured by using target SI in the third SFN;
in a case that an RS received by the terminal includes a first RS, and the first RS is associated with a RACH resource, the second RACH resource is a RACH resource associated with a specific RS of the third SFN, where
the first RS is an SFN specific RS, or the second RS is a cell or TRP specific RS; and the target SI is SFN specific SI or cell or TRP specific SI.

During specific implementation, the first RACH resource may be specified in a protocol, configured by the network side device, or coordinated and determined by the second SFN and the third SFN, which may be specifically determined according to an actual situation. This is not limited in this embodiment of this application.

Case 3: Moving in the at least one SFN includes moving from a third object in a fourth SFN to a fourth object in a fifth SFN.

In the case 3, the second RACH resource may be any one of the following: a RACH resource associated with a specific RS of the fifth SFN or a RACH resource corresponding to the fourth object. In other words, a RACH resource corresponding to a target object (which is also referred to as a new object, that is, the fourth object) or a RACH resource associated with a target SFN (that is, the fifth SFN) specific RS may be used for the terminal to perform the first RACH process.

Further, the second RACH resource meets any one of the following:
in a case that an RS received by the terminal includes a first RS and a second RS, and the first RS is not associated with a RACH resource, the second RACH resource is a RACH resource corresponding to the fourth object;
in a case that an RS received by the terminal includes a first RS and a second RS, and the first RS is associated with a RACH resource, the second RACH resource is any one of the following: a RACH resource associated with a specific RS of the fifth SFN or a RACH resource corresponding to the fourth object; or
in a case that an RS received by the terminal includes only a first RS, and the first RS is associated with a RACH resource, the second RACH resource is a RACH resource associated with a specific RS of the fifth SFN, where
the object includes any one of the following: an SFN specific cell, a cell or TRP specific cell, or a TRP; and the first RS is an SFN specific RS, or the second RS is a cell or TRP specific RS.

During specific implementation, the first RACH resource may be specified in a protocol, configured by the network side device, or coordinated and determined by the third object and the fourth object, which may be specifically determined according to an actual situation. This is not limited in this embodiment of this application.

It is to be noted that, in this embodiment of this application, a RACH resource corresponding to an object (such as the first object or the second object) may be configured by using any one of the following: the SFN specific SI or the cell or TRP specific SI. The RACH resource associated with the SFN (that is, the first SFN) specific RS may be configured by using any one of the following: the SFN specific SI or the cell or TRP specific SI.

In this embodiment of this application, a specific implementation of the first operation may be specified in a protocol, configured by the network side device, or determined based on a condition, which may be specifically determined according to an actual situation. This is not limited in this embodiment of this application.

The case in which the specific implementation of the first operation based on a condition is described below:
1) Optionally, in a case that a first condition is met, the first operation includes: ending the RACH process. In other words, in a case that the first condition is met, the terminal may end the RACH process if the terminal moves in at least one single frequency network SFN in a case of performing a first random access channel RACH process.

During specific implementation, that the first condition is met may be determined based on an actual situation. This is not limited in this embodiment of this application. Optionally, the first condition may meet at least one of the following:
a RACH resource associated with a second RS is used in the first RACH process; or
RACH resources configured by using second SI corresponding to different objects are different or independent, where
the second RS is a cell or TRP specific RS; the object includes any one of the following: an SFN specific cell, a cell or TRP specific cell, or a TRP; and the second SI is cell or TRP specific SI.

That RACH resources configured by using second SI corresponding to different objects are different or independent may be understood as that: RACH resources configured by using SI corresponding to the objects are independent or different from each other, and a RACH resource configured by using SI corresponding to a same object may be the same.

2) Optionally, in a case that a second condition is met, the first operation includes: ending the first RACH process and starting to perform a second RACH process. In other words, in a case that the second condition is met, if the terminal moves in at least one single frequency network SFN in a case of performing a first random access channel RACH process, the terminal may end the first RACH process and start to perform a second RACH process.

During specific implementation, that the second condition is met may be determined based on an actual situation. This is not limited in this embodiment of this application. Optionally, the second condition may meet at least one of the following:
a RACH resource associated with a second RS is used in the first RACH process; or
RACH resources configured by using second SI corresponding to different objects are different or independent, where
the second RS is a cell or TRP specific RS; the object includes any one of the following: an SFN specific cell, a cell or TRP specific cell, or a TRP; and the second SI is cell or TRP specific SI.

3) Optionally, in a case that a third condition is met, the first operation includes: continuing performing the first RACH process. In other words, in a case that the third condition is met, the terminal may continue performing the first RACH process if the terminal moves in at least one single frequency network SFN in a case of performing a first random access channel RACH process.

During specific implementation, that the third condition is met may be determined based on an actual situation. This is not limited in this embodiment of this application. Optionally, that the third condition is met includes at least one of the following:
a RACH resource associated with a first RS is used in the first RACH process; or
a RACH resource used in the first RACH process is coordinated and determined by the at least one SFN or an object in an SFN range, where
the first RS is an SFN specific RS.

For a case in which the third condition meets that a RACH resource used in the first RACH process is coordinated and determined by the at least one SFN or an object in an SFN range,
if moving in the at least one SFN includes moving from a first object to a second object in a first SFN, the third condition may specifically be represented as that: the RACH resource used in the first RACH process is coordinated and determined by the first object and the second object;
if moving in the at least one SFN includes moving from a second SFN to a third SFN, and accessing an SFN layer by the terminal, the third condition may specifically be represented as that: the RACH resource used in the first RACH process is coordinated and determined by the second SFN and the third SFN; and
if moving in the at least one SFN includes moving from a third object in a fourth SFN to a fourth object in a fifth SFN, the third condition may specifically be represented as that: the RACH resource used in the first RACH process is coordinated and determined by the third object and the fourth object.

In this embodiment of this application, ending the RACH process may also be referred to as stopping (Stop) the RACH process or releasing (Release) the RACH process.

Optionally, ending the RACH process includes at least one of the following:
stopping sending an uplink message in the RACH process;
stopping receiving a downlink message in the RACH process;
releasing a resource associated with the RACH process; or
stopping or resetting a timer and a counter associated with the RACH process.

During specific implementation, the uplink message may include at least one of the following in the RACH process: a Msg.1, a Msg.3, a Msg.A, or a Msg.5. The downlink message may include at least one of the following in the RACH process: a Msg.2, a Msg.4, or a Msg.B.

Optionally, in this embodiment of this application, before performing the first operation, the method further includes:
obtaining a candidate RACH resource according to first information; and
performing the first RACH process according to the candidate RACH resource, where
the first information includes at least one of the following: cell or TRP specific SI; SFN specific SI; a radio resource control (Radio Resource Control, RRC) message; or a paging (paging) message.

During specific implementation, before initiating the first RACH process, the terminal may first receive first information, and obtain a candidate RACH resource from the first information; and then the terminal may start to perform the first RACH process according to the candidate RACH resource. It may be understood that, the foregoing steps are performed before the terminal moves in at least one SFN.

In a case that the first information includes an RRC message, the RRC message may be a dedicated (dedicated) RRC message sent by the network side device during a last RRC release or suspend (Suspend), but is not limited thereto.

Optionally, the candidate RACH resource includes at least one of the following: a RACH resource associated with a cell or TRP specific RS, or a RACH resource associated with an SFN specific RS.

During specific implementation, the candidate RACH resource may be related to a representation form of the RS received by the terminal. Detailed descriptions are as follows:

In a case that the RS received by the terminal includes a first RS and a second RS, and the first RS is not associated with a RACH resource, the candidate RACH resource includes a RACH resource associated with a cell or TRP specific RS. In other words, in a case of initiating random access, the terminal may use the RACH resource associated with the cell/TRP specific RS; or the terminal may perform random access according to the cell/TRP specific RS.

In a case that the RS received by the terminal includes a first RS and a second RS, and the first RS is associated with a RACH resource, the candidate RACH resource includes at least one of the following: a RACH resource associated with a cell or TRP specific RS, or a RACH resource associated with an SFN specific RS. In other words, in a case of initiating random access, the terminal may use the RACH resource associated with the cell/TRP specific RS and/or the RACH resource associated with the SFN specific RS.

In a case that the RS received by the terminal includes only a first RS, and the first RS is associated with a RACH resource, the candidate RACH resource includes: a RACH resource associated with an SFN specific RS. In other words, in a case of initiating random access, the terminal may use a RACH resource associated with an SFN specific SSB.

Optionally, performing the first RACH process according to the candidate RACH resource includes:
selecting a third RACH resource from the candidate RACH resource according to second information; and
performing the first RACH process according to the third RACH resource, where
the second information includes at least one of the following: a preset rule, a measurement result of a cell or TRP specific RS, or a measurement result of an SFN specific RS.

During specific implementation, the preset rule may be specified in a protocol or configured by the network side device, which may be specifically determined according to an actual situation. This is not limited in this embodiment of this application.

Optionally, in this embodiment of this application, the method further includes:
performing a second operation in a case of moving in the at least one single frequency network SFN during execution of the first random access channel RACH process performed by the terminal, where
the second operation includes at least one of the following:
   receiving cell or TRP specific SI;
   receiving SFN specific SI;
   receiving a cell or TRP specific RS; or
   receiving an SFN specific RS.

During specific implementation, a specific representation form of the second operation may be related to a specific representation form of moving in the at least one SFN and/or a specific representation form of the RS received by the terminal.
1) In a case that the RS received by the terminal includes a first RS and a second RS, and the first RS is not associated with a RACH resource, the second operation includes at least one of the following: receiving cell or TRP specific SI; receiving an SFN specific SI.
2) In a case that the RS received by the terminal includes a first RS and a second RS, and the first RS is associated with a RACH resource; and moving in the at least one SFN includes moving from a first object to a second object in a first SFN, the second operation includes any one of the following: receiving cell or TRP specific SI; receiving an SFN specific SI.
3) In a case that the RS received by the terminal includes a first RS and a second RS, and the first RS is associated with a RACH resource; and moving in the at least one SFN includes moving from a second SFN to a third SFN, and accessing an SFN layer by the terminal, or moving from a third object in a fourth SFN to a fourth object in a fifth SFN, the second operation includes at least one of the following: receiving cell or TRP specific SI; receiving SFN specific SI; or receiving an SFN specific RS.
4) In a case that the RS received by the terminal includes only a first RS, and the first RS is associated with a RACH resource; and moving in the at least one SFN includes moving from a first object to a second object in a first SFN, the second operation includes any one of the following: receiving cell or TRP specific SI; receiving an SFN specific SI.
5) In a case that the RS received by the terminal includes only a first RS, and the first RS is associated with a RACH resource; and moving in the at least one SFN includes moving from a second SFN to a third SFN, and accessing an SFN layer by the terminal, or moving from a third object in a fourth SFN to a fourth object in a fifth SFN, the second operation includes at least one of the following: receiving cell or TRP specific SI; receiving SFN specific SI; or receiving an SFN specific RS.

Optionally, in this embodiment of this application, the method further includes:
receiving a cell or TRP specific RS according to third information, where
the third information includes at least one of the following: a Paging message, SI corresponding to a cell or a TRP, or SI corresponding to an SFN.

During specific implementation, the third information may carry related information of a cell or TRP specific RS. In this way, after receiving the third information, the terminal may receive the cell or TRP specific RS according to the related information of the cell or TRP specific RS obtained from the third information.

Before initiating random access or sending a preamble each time, the terminal may receive the cell or TRP specific RS according to third information. Certainly, in other cases, the cell or TRP specific RS may also be received according to the third information.

In this embodiment of this application, coverage of an SFN specific cell is larger than coverage of a cell or TRP specific cell.

Optionally, in a case that a high frequency range and a low frequency range are deployed for a network, the SFN specific cell includes a cell in the low frequency range, and the cell or TRP specific cell includes a cell in the high frequency range; or
in a case that the network includes a satellite communication network, the SFN specific cell includes a high altitude platform station (High Altitude Platform Station, HAPS) cell or a high-earth orbit satellite cell, and the cell or TRP specific cell includes a low-earth orbit satellite cell or a cell covered by a ground base station.

Referring to FIG. 6, FIG. 6 is a second flowchart of a random access method according to an embodiment of this application. The random access method in this embodiment of this application is performed by a network side device.

As shown in FIG. 6, the random access method may include the following steps:

Step 601: Perform a first operation in a case of moving in at least one single frequency network SFN during execution of a first random access channel RACH process by a terminal.

The first operation includes any one of the following:
continuing performing the first RACH process;
ending the first RACH process and starting to perform a second RACH process; or
ending the RACH process.

In the random access method in this embodiment of this application, if the terminal moves in at least one SFN in a case of performing a first RACH process, the terminal or the network side device may perform a first operation, where the first operation includes any one of the following: continuing performing the first RACH process; ending the first RACH process and starting to perform a second RACH process; or ending the RACH process. In view of the above, the embodiments of this application provide a solution for implementing a RACH process in an SFN scenario. The RACH process is effectively combined with an SFN, to quickly access to a network, thereby effectively reducing power consumption and an access delay of the terminal.

Optionally, moving in the at least one SFN includes any one of the following:
moving from a first object to a second object in a first SFN;
moving from a second SFN to a third SFN, and accessing, by the terminal, an SFN layer; or
moving from a third object in a fourth SFN to a fourth object in a fifth SFN, where
the object includes any one of the following: an SFN specific cell, a cell or transmission reception point TRP specific cell, or a TRP.

Optionally, performing the first operation includes:
performing the first operation in a case that a reference signal RS sent by the network side device includes an SFN specific RS.

Optionally, the continuing performing the first RACH process includes:
continuing performing the first RACH process according to a first RACH resource.

Optionally, in a case that moving in the at least one SFN includes moving from the first object to the second object in the first SFN, the first RACH resource meets any one of the following:
in a case that an RS sent by the network side device includes a first RS and a second RS, and the first RS is not associated with a RACH resource, the first RACH resource is any one of the following: a RACH resource corresponding to the second object or a RACH resource corresponding to the first object;
in a case that an RS sent by the network side device includes a first RS and a second RS, and the first RS is associated with a RACH resource, the first RACH resource is any one of the following: a RACH resource associated with a specific RS of the first SFN, a RACH resource corresponding to the second object, or a RACH resource corresponding to the first object; or
in a case that an RS sent by the network side device includes only a first RS, and the first RS is associated with a RACH resource, the first RACH resource is a RACH resource associated with a specific RS of the first SFN, where
the object includes any one of the following: an SFN specific cell, a cell or TRP specific cell, or a TRP; and the first RS is an SFN specific RS, or the second RS is a cell or TRP specific RS.

Optionally, in a case that moving in the at least one SFN includes moving from the second SFN to the third SFN, and accessing the SFN layer by the terminal, the first RACH resource meets any one of the following:
in a case that an RS sent by the network side device includes a first RS and a second RS, and the first RS is not associated with a RACH resource, the first RACH resource is any one of the following: a RACH resource configured by using target system information SI in the second SFN or a RACH resource configured by using target SI in the third SFN; or
in a case that an RS sent by the network side device includes a first RS, and the first RS is associated with a RACH resource, the first RACH resource is any one of the following: a RACH resource associated with a specific RS of the second SFN or a RACH resource associated with a specific RS of the third SFN, where
the first RS is an SFN specific RS, or the second RS is a cell or TRP specific RS; and the target SI is SFN specific SI or cell or TRP specific SI.

Optionally, in a case that moving in the at least one SFN includes moving from the third object in the fourth SFN to the fourth object in the fifth SFN, the first RACH resource meets any one of the following:
in a case that an RS sent by the network side device includes a first RS and a second RS, and the first RS is not associated with a RACH resource, the first RACH resource is any one of the following: a RACH resource corresponding to the third object or a RACH resource corresponding to the fourth object;
in a case that an RS sent by the network side device includes a first RS and a second RS, and the first RS is associated with a RACH resource, the first RACH resource is any one of the following: a RACH resource associated with a specific RS of the fourth SFN, a RACH resource associated with a specific RS of the fifth SFN, a RACH resource corresponding to the third object, or a RACH resource corresponding to the fourth object; or
in a case that an RS sent by the network side device includes only a first RS, and the first RS is associated with a RACH resource, the first RACH resource is any one of the following: a RACH resource associated with a specific RS of the fourth SFN or a RACH resource associated with a specific RS of the fifth SFN, where
the object includes any one of the following: an SFN specific cell, a cell or TRP specific cell, or a TRP; and the first RS is an SFN specific RS, or the second RS is a cell or TRP specific RS.

Optionally, the first RACH resource is configured by using any one of the following: the SFN specific SI or the cell or TRP specific SI.

Optionally, starting to perform the second RACH process includes:
starting to perform the second RACH process according to a second RACH resource.

Optionally, in a case that moving in the at least one SFN includes moving from the first object to the second object in the first SFN, the second RACH resource meets any one of the following:
in a case that an RS sent by the network side device includes a first RS and a second RS, and the first RS is not associated with a RACH resource, the second RACH resource is a RACH resource corresponding to the second object;
in a case that an RS sent by the network side device includes a first RS and a second RS, and the first RS is associated with a RACH resource, the second RACH resource is any one of the following: a RACH resource associated with a specific RS of the first SFN or a RACH resource corresponding to the second object; or
in a case that an RS sent by the network side device includes only a first RS, and the first RS is associated with a RACH resource, the second RACH resource is a RACH resource associated with a specific RS of the first SFN, where
the object includes any one of the following: an SFN specific cell, a cell or TRP specific cell, or a TRP; and the first RS is an SFN specific RS, or the second RS is a cell or TRP specific RS.

Optionally, in a case that moving in the at least one SFN includes moving from the second SFN to the third SFN, and accessing the SFN layer by the terminal, the second RACH resource meets any one of the following:
in a case that an RS sent by the network side device includes a first RS and a second RS, and the first RS is not associated with a RACH resource, the second RACH resource is a RACH resource configured by using target SI in the third SFN;
in a case that an RS sent by the network side device includes a first RS, and the first RS is associated with a RACH resource, the second RACH resource is a RACH resource associated with a specific RS of the third SFN, where
the first RS is an SFN specific RS, or the second RS is a cell or TRP specific RS; and the target SI is SFN specific SI or cell or TRP specific SI.

Optionally, in a case that moving in the at least one SFN includes moving from the third object in the fourth SFN to the fourth object in the fifth SFN, the second RACH resource meets any one of the following:
in a case that an RS sent by the network side device includes a first RS and a second RS, and the first RS is not associated with a RACH resource, the second RACH resource is a RACH resource corresponding to the fourth object;
in a case that an RS sent by the network side device includes a first RS and a second RS, and the first RS is associated with a RACH resource, the second RACH resource is any one of the following: a RACH resource associated with a specific RS of the fifth SFN or a RACH resource corresponding to the fourth object; or
in a case that an RS sent by the network side device includes only a first RS, and the first RS is associated with a RACH resource, the second RACH resource is a RACH resource associated with a specific RS of the fifth SFN, where
the object includes any one of the following: an SFN specific cell, a cell or TRP specific cell, or a TRP; and the first RS is an SFN specific RS, or the second RS is a cell or TRP specific RS.

Optionally, the second RACH resource is configured by using any one of the following: the SFN specific SI or the cell or TRP specific SI.

Optionally, in a case that a first condition is met, the first operation includes: ending the RACH process.

Optionally, that the first condition is met includes at least one of the following:
a RACH resource associated with a second RS is used in the first RACH process; or
RACH resources configured by using second SI corresponding to different objects are different or independent, where
the second RS is a cell or TRP specific RS; the object includes any one of the following: an SFN specific cell, a cell or TRP specific cell, or a TRP; and the second SI is cell or TRP specific SI.

Optionally, ending the RACH process includes at least one of the following:
stopping receiving an uplink message in the RACH process;
stopping sending a downlink message in the RACH process;
releasing a resource associated with the RACH process; or
stopping or resetting a timer and a counter associated with the RACH process.

Optionally, in a case that a second condition is met, the first operation includes: ending the first RACH process and starting to perform a second RACH process.

Optionally, that the second condition is met includes at least one of the following:
a RACH resource associated with a second RS is used in the first RACH process; or
RACH resources configured by using second SI corresponding to different objects are different or independent, where
the second RS is a cell or TRP specific RS; the object includes any one of the following: an SFN specific cell, a cell or TRP specific cell, or a TRP; and the second SI is cell or TRP specific SI.

Optionally, in a case that a third condition is met, the first operation includes: continuing performing the first RACH process.

Optionally, that the third condition is met includes at least one of the following:
a RACH resource associated with a first RS is used in the first RACH process; or
a RACH resource used in the first RACH process is coordinated and determined by the at least one SFN or an object in an SFN range, where
the first RS is an SFN specific RS.

Optionally, before performing the first operation, the method further includes:
obtaining a candidate RACH resource according to first information; and
performing the first RACH process according to the candidate RACH resource, where
the first information includes at least one of the following: cell or TRP specific SI; SFN specific SI; a radio resource control RRC message; or a paging paging message.

Optionally, the candidate RACH resource includes at least one of the following: a RACH resource associated with a cell or TRP specific RS, or a RACH resource associated with an SFN specific RS.

Optionally, performing the first RACH process according to the candidate RACH resource includes:
selecting a third RACH resource from the candidate RACH resource according to second information; and
performing the first RACH process according to the third RACH resource, where
the second information includes at least one of the following: a preset rule, a measurement result of a cell or TRP specific RS, or a measurement result of an SFN specific RS.

Optionally, the method further includes:
performing a second operation in a case of moving in the at least one single frequency network SFN during execution of the first random access channel RACH process performed by the terminal, where
the second operation includes at least one of the following:
   sending cell or TRP specific SI;
   sending SFN specific SI;
   sending cell or TRP specific RS; or
   sending an SFN specific RS.

Optionally, the method further includes:
sending a cell or TRP specific RS according to third information, where
the third information includes at least one of the following: a Paging message, SI corresponding to a cell or a TRP, or SI corresponding to an SFN.

Optionally, in a case that a high frequency range and a low frequency range are deployed for a network, the SFN specific cell includes a cell in the low frequency range, and the cell or TRP specific cell includes a cell in the high frequency range; or
in a case that the network includes a satellite communication network, the SFN specific cell includes a high altitude platform station HAPS cell or a high-earth orbit satellite cell, and the cell or TRP specific cell includes a low-earth orbit satellite cell or a ground base station-covered cell.

It is to be noted that, this embodiment is used as an embodiment of the network side device corresponding to the method embodiment in FIG. 5. Therefore, for details, reference may be made to related descriptions of the method embodiment in FIG. 5, and the same beneficial effects can be achieved. To avoid repetition, details are not described herein again.

It is to be noted that, a plurality of optional implementations described in the embodiments of this application may be implemented in a combination, or may be implemented independently. This is not limited in this embodiment of this application.

For ease of understanding, descriptions are exemplarily given below:

It is to be noted that, in the following examples, the RS is represented as an SSB, but it may be understood that, the specific representation form of the RS is not limited thereby.

Case 1: A system includes an SFN specific SSB and a cell/TRP specific SSB. In other words, an SSB received by the terminal includes the SFN specific SSB and the cell/TRP specific SSB, and an SSB sent by the network side device includes the SFN specific SSB and the cell/TRP specific SSB.

Case 1-1: The SFN specific SSB is not associated (associated) with a RACH resource.

In a case of initiating random access, the terminal uses a RACH resource associated with the cell/TRP specific SSB; or the terminal performs random access according to the cell/TRP specific SSB. Detailed descriptions are as follows:

Before a RACH process is initiated:
1. The terminal obtains a RACH resource. Specifically, the RACH resource is cell specific and may be obtained in at least one of the following manners:
   a) obtaining from cell/TRP specific SI;
   b) obtaining from SFN specific SI;
   c) sending, by the network, to the UE through a dedicated RRC message during a last RRC release/Suspend; and
   d) obtaining from a paging message.
2. Optionally, the terminal receives cell specific SI, if exists.
3. Optionally, the terminal receives cell specific SSB, if exists. Further, related information of the cell specific SSB is obtained in at least one of the following manners:
   a) obtaining from a paging message;
   b) obtaining from cell/TRP specific SI; and
   c) obtaining from SFN specific SI.

During the RACH process:
1. An associated RACH resource is selected based on a measurement result of the cell/TRP specific SSB, to initiate the RACH process, including sending a preamble, receiving an RAR, sending a Msg.3, and receiving a Msg.4.

For example, a RACH resource corresponding to an SSB with an optimal measurement result is selected to send the preamble or Msg.3, and
the Msg.2 or Msg.4 is received on the SSB with an optimal measurement result.

2. During the RACH process, if cell change including cell selection or switching (synchronous reconfiguration) occurs in the SFN (super cell), one of the following operations is performed:
a) Continue performing the RACH process, where a RACH resource may be a RACH resource of a new cell or a RACH resource of a source cell.
   Further, in a), RACH resources of the UE need to be coordinated between SFNs (super cells).
b) Restart the RACH process, where a RACH resource may be a RACH resource of a new cell.
c) End the RACH process.

In the process 2, further, the cell/TRP specific SI and/or the SFN specific SI need to be received again when cell change occurs in the SFN.

3. During the RACH process, if SFN (super cell) change or cell changes including cell selection or switching (synchronous reconfiguration) occurs between SFNs (super cells), one of the following operations is performed:
a) Continue continue performing the RACH process, where a RACH resource may be a RACH resource of a new cell, or a RACH resource of a source cell is still used.
   Further, in a), RACH resources of the UE need to be coordinated between SFNs (super cells).
b) Restart Restart the RACH process, where a RACH resource may be a RACH resource of a new cell.
c) End (stop/release) the RACH process.

In the process 3, further, the cell/TRP specific SI and/or the SFN specific SI need to be received again when SFN (super cell) change or cell change between SFNs (super cells) occurs.

Case 1-2: The SFN specific SSB is associated (associated) with a RACH resource.

The RACH resource associated with the SFN specific SSB is shared by all cells/TRPs in the SFN (super cell).

In a case of initiating random access, the terminal uses the RACH resource associated with the cell/TRP specific SSB and/or the RACH resource associated with the SFN specific SSB. Detailed descriptions are as follows:

Before a RACH process is initiated:
1. The terminal obtains a RACH resource.
   Specifically, the RACH resource corresponds to the cell/TRP specific SSB and/or the SFN specific SSB, and may be obtained in at least one of the following manners:
   a) obtaining from cell/TRP specific SI;
   b) obtaining from SFN specific SI;
   c) sending, by the network, to the UE through a dedicated RRC message during a last RRC release/Suspend; and
   d) obtaining from a paging message.
2. Optionally, the terminal receives cell specific SI, if exists.
3. Optionally, the terminal receives cell specific SSB, if exists. Further, related information of the cell specific SSB is obtained in at least one of the following manners:
   a) obtaining from a paging message;
   b) obtaining from cell/TRP specific SI; and
   c) obtaining from SFN specific SI.

During the RACH process:
1. An associated RACH resource is selected based on a preset rule, and/or a measurement result of the cell/TRP specific SSB, and/or a measurement result of the SFN specific SSB, to initiate the RACH process, including sending a preamble, receiving an RAR, sending a Msg.3, and receiving a Msg.4.

For example, a RACH resource corresponding to an SSB with an optimal measurement result is selected to send the preamble or Msg.3, and
the Msg.2 or Msg.4 is received on the SSB with an optimal measurement result.

2. During the RACH process, if cell change including cell selection or switching (synchronous reconfiguration) occurs in the SFN (super cell), one of the following operations is performed:
a) Continue performing the RACH process, where a RACH resource is a RACH resource corresponding to an SFN super cell, or a RACH resource of a new cell, or a RACH resource of a source cell is still used.

Further, the RACH process is continued only when the RACH resource corresponding to the SFN specific SSB is used.

Further, in a), cell/TRP specific RACH resources of the UE need to be coordinated in SFNs (super cells).

b) Restart the RACH process, where a RACH resource may be a RACH resource of a new cell.

Further, the RACH process is restarted only when the RACH resource corresponding to the cell/TRP specific SSB is used.

c) End the RACH process.

Further, the RACH process is ended only when the RACH resource corresponding to the cell/TRP specific SSB is used.

In the process 2, further, the cell/TRP specific SI and/or the SFN specific SI need to be received again when cell change occurs in the SFN.

3. During the RACH process, if SFN (super cell) change or cell changes including cell selection or switching (synchronous reconfiguration) occurs between SFNs (super cells), one of the following operations is performed:
a) Continue performing the RACH process, where a RACH resource may be a RACH resource corresponding to a new SFN super cell, or a RACH resource of a new cell, or a RACH resource of a source cell is still used.
   Further, in a), RACH resources of the UE need to be coordinated between SFNs (super cells).
b) Restart the RACH process, where a RACH resource may be a RACH resource of a new SFN super cell or a RACH resource of a new cell.
c) End the RACH process.

In the process 3, further, the SFN specific SSB, and the cell/TRP specific SI and/or the SFN specific SI need to be received again when SFN (super cell) change or cell change between SFNs (super cells) occurs.

Case 2: All SSBs included in the system are SFN SPECIFIC SSBs. In other words, SSBs received by the terminal are SFN SPECIFIC SSBs, and SSBs sent by the network side device are SFN SPECIFIC SSBs.

A RACH resource corresponding to the SFN SPECIFIC SSB is shared by all cells/TRPs in the SFN (super cell).

In a case of initiating random access, the terminal uses the RACH resource associated with the SFN specific SSB. Specifically,

Before a RACH process is initiated:
1. The terminal obtains a RACH resource. Specifically, the RACH resource corresponds to the SFN SPECIFIC SSB and may be obtained in at least one of the following manners:
   a) obtaining from cell/TRP specific SI;
   b) obtaining from SFN specific SI;
   c) sending, by the network, to the UE through a dedicated RRC message during a last RRC release/Suspend; and
   d) obtaining from a paging message.
2. Optionally, the terminal receives cell specific SI, if exists.

During the RACH process:
1. An associated RACH resource is selected based on a preset rule, and (optionally, a measurement result of the SFN specific SSB) to initiate the RACH process, including sending a preamble, receiving an RAR, sending a Msg.3, and receiving a Msg.4.

For example, a RACH resource corresponding to an SSB with an optimal measurement result is selected to send the preamble or Msg.3, and
the Msg.2 or Msg.4 is received on the SSB with an optimal measurement result.

2. During the RACH process, if cell change including cell selection or switching (synchronous reconfiguration) occurs in the SFN (super cell), one of the following operations is performed:
a) Continue performing the RACH process, where a RACH resource is a RACH resource corresponding to an SFN super cell, which may be a RACH resource configured by using SFN specific SI, or a RACH resource configured by using new cell SI.

Further, the RACH process is continued only when the RACH resource configured by using the SFN specific SI is used, or resources configured by using cell/TRP specific SI are the same.

Further, in a), cell/TRP specific RACH resources of the UE need to be coordinated in SFNs (super cells).

b) Restart the RACH process, where a RACH resource may be a RACH resource configured by using SFN specific SI, or a RACH resource configured by using new cell SI.

Further, the RACH process is restarted only when the resources configured by using the cell/TRP specific SI are independent or different.

c) End the RACH process.

Further, the RACH process is ended only when the resources configured by using the cell/TRP specific SI are independent or different.

In the process 2, further, the cell/TRP specific SI and/or the SFN specific SI need to be received again when cell change occurs in the SFN.

3. During the RACH process, if SFN (super cell) change or cell changes including cell selection or switching (synchronous reconfiguration) occurs between SFNs (super cells), one of the following operations is performed:
a) Continue performing the RACH process, where a RACH resource may be a RACH resource corresponding to a new SFN super cell, or a RACH resource of a new cell, or a RACH resource of a source cell is still used.
   Further, in a), RACH resources of the UE need to be coordinated between SFNs (super cells).
b) Restart the RACH process, where a RACH resource may be a RACH resource of a new SFN super cell or a RACH resource of a new cell.
c) End the RACH process.

In the process 3, further, the SFN specific SSB, and the cell/TRP specific SI and/or the SFN specific SI need to be received again when SFN (super cell) change or cell change between SFNs (super cells) occurs.

Further, the cell/TRP specific SI needs to be received each time a preamble is transmitted.

Case 3: All SSBs included in the system are cell specific SSBs. In other words, SSBs received by the terminal are cell specific SSBs, and SSBs sent by the network side device are cell specific SSBs.
1. The terminal implements cell selection and reselection according to SSB measurement.
2. The terminal selects a RACH resource according to SSB measurement to perform random access.

In a case that a high-frequency layer (high-frequency layer) and a low frequency layer (low frequency layer) are deployed for a network, a cell/TRP corresponding to the low frequency layer may be used as the SFN or the super cell, and a cell/TRP corresponding to the high frequency layer may be used as a cell/TRP in the SFN/super cell.

For satellite communication (satellite or HAPS), a HAPS/satellite cell may be used as an SFN/super cell, a cell/TRP corresponding to a low-orbit satellite in such a range or another ordinary cell/TRP in such a range, or used as a cell/TRP in the SFN/super cell.

In the embodiments of this application, power consumption of the terminal can be effectively reduced. Interruption caused by mobility is reduced during the RACH process.

It is to be noted that, an execution entity of the random access method provided in the embodiments of this application may be a random access apparatus, or may be a control module in the random access apparatus for performing the random access method. The random access apparatus provided in the embodiments of this application is described in the embodiments of this application by using an example in which the random access apparatus performs the random access method.

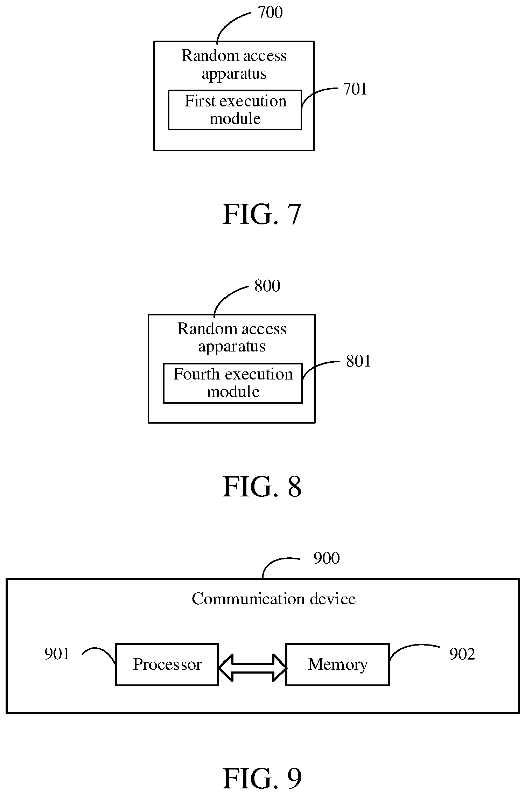

Referring to FIG. 7, FIG. 7 is a first structural diagram of a random access apparatus according to an embodiment of this application.

As shown in FIG. 7, the random access apparatus 700 includes:
a first execution module 701, configured to perform a first operation in a case of moving in at least one single frequency network SFN during execution of a first random access channel RACH process performed by a terminal, where
the first operation includes any one of the following:
   continuing performing the first RACH process;
   ending the first RACH process and starting to perform a second RACH process; or
   ending the RACH process.

Optionally, moving in the at least one SFN includes any one of the following:
moving from a first object to a second object in a first SFN;
moving from a second SFN to a third SFN, and accessing, by the terminal, an SFN layer; or
moving from a third object in a fourth SFN to a fourth object in a fifth SFN, where
the object includes any one of the following: an SFN specific cell, a cell or transmission reception point TRP specific cell, or a TRP.

Optionally, the first execution module 701 is specifically configured to:
perform the first operation in a case that a reference signal RS received by the terminal includes an SFN specific RS.

Optionally, the continuing performing the first RACH process includes:
continuing performing the first RACH process according to a first RACH resource.

Optionally, in a case that moving in the at least one SFN includes moving from the first object to the second object in the first SFN, the first RACH resource meets any one of the following:
in a case that an RS received by the terminal includes a first RS and a second RS, and the first RS is not associated with a RACH resource, the first RACH resource is any one of the following: a RACH resource corresponding to the second object or a RACH resource corresponding to the first object;
in a case that an RS received by the terminal includes a first RS and a second RS, and the first RS is associated with a RACH resource, the first RACH resource is any one of the following: a RACH resource associated with a specific RS of the first SFN, a RACH resource corresponding to the second object, or a RACH resource corresponding to the first object; or
in a case that an RS received by the terminal includes only a first RS, and the first RS is associated with a RACH resource, the first RACH resource is a RACH resource associated with a specific RS of the first SFN, where
the object includes any one of the following: an SFN specific cell, a cell or TRP specific cell, or a TRP; and the first RS is an SFN specific RS, or the second RS is a cell or TRP specific RS.

Optionally, in a case that moving in the at least one SFN includes moving from the second SFN to the third SFN, and accessing the SFN layer by the terminal, the first RACH resource meets any one of the following:
in a case that an RS received by the terminal includes a first RS and a second RS, and the first RS is not associated with a RACH resource, the first RACH resource is any one of the following: a RACH resource configured by using target system information SI in the second SFN or a RACH resource configured by using target SI in the third SFN; or
in a case that an RS received by the terminal includes a first RS, and the first RS is associated with a RACH resource, the first RACH resource is any one of the following: a RACH resource associated with a specific RS of the second SFN or a RACH resource associated with a specific RS of the third SFN, where
the first RS is an SFN specific RS, or the second RS is a cell or TRP specific RS; and the target SI is SFN specific SI or cell or TRP specific SI.

Optionally, in a case that moving in the at least one SFN includes moving from the third object in the fourth SFN to the fourth object in the fifth SFN, the first RACH resource meets any one of the following:
in a case that an RS received by the terminal includes a first RS and a second RS, and the first RS is not associated with a RACH resource, the first RACH resource is any one of the following: a RACH resource corresponding to the third object or a RACH resource corresponding to the fourth object;
in a case that an RS received by the terminal includes a first RS and a second RS, and the first RS is associated with a RACH resource, the first RACH resource is any one of the following: a RACH resource associated with a specific RS of the fourth SFN, a RACH resource associated with a specific RS of the fifth SFN, a RACH resource corresponding to the third object, or a RACH resource corresponding to the fourth object; or
in a case that an RS received by the terminal includes only a first RS, and the first RS is associated with a RACH resource, the first RACH resource is any one of the following: a RACH resource associated with a specific RS of the fourth SFN or a RACH resource associated with a specific RS of the fifth SFN, where
the object includes any one of the following: an SFN specific cell, a cell or TRP specific cell, or a TRP; and the first RS is an SFN specific RS, or the second RS is a cell or TRP specific RS.

Optionally, the first RACH resource is configured by using any one of the following: the SFN specific SI or the cell or TRP specific SI.

Optionally, starting to perform the second RACH process includes:
starting to perform the second RACH process according to a second RACH resource.

Optionally, in a case that moving in the at least one SFN includes moving from the first object to the second object in the first SFN, the second RACH resource meets any one of the following:
in a case that an RS received by the terminal includes a first RS and a second RS, and the first RS is not associated with a RACH resource, the second RACH resource is a RACH resource corresponding to the second object;
in a case that an RS received by the terminal includes a first RS and a second RS, and the first RS is associated with a RACH resource, the second RACH resource is any one of the following: a RACH resource associated with a specific RS of the first SFN or a RACH resource corresponding to the second object; or
in a case that an RS received by the terminal includes only a first RS, and the first RS is associated with a RACH resource, the second RACH resource is a RACH resource associated with a specific RS of the first SFN, where
the object includes any one of the following: an SFN specific cell, a cell or TRP specific cell, or a TRP; and the first RS is an SFN specific RS, or the second RS is a cell or TRP specific RS.

Optionally, in a case that moving in the at least one SFN includes moving from the second SFN to the third SFN, and accessing the SFN layer by the terminal, the second RACH resource meets any one of the following:
in a case that an RS received by the terminal includes a first RS and a second RS, and the first RS is not associated with a RACH resource, the second RACH resource is a RACH resource configured by using target SI in the third SFN;
in a case that an RS received by the terminal includes a first RS, and the first RS is associated with a RACH resource, the second RACH resource is a RACH resource associated with a specific RS of the third SFN, where
the first RS is an SFN specific RS, or the second RS is a cell or TRP specific RS; and the target SI is SFN specific SI or cell or TRP specific SI.

Optionally, in a case that moving in the at least one SFN includes moving from the third object in the fourth SFN to the fourth object in the fifth SFN, the second RACH resource meets any one of the following:
in a case that an RS received by the terminal includes a first RS and a second RS, and the first RS is not associated with a RACH resource, the second RACH resource is a RACH resource corresponding to the fourth object;
in a case that an RS received by the terminal includes a first RS and a second RS, and the first RS is associated with a RACH resource, the second RACH resource is any one of the following: a RACH resource associated with a specific RS of the fifth SFN or a RACH resource corresponding to the fourth object; or
in a case that an RS received by the terminal includes only a first RS, and the first RS is associated with a RACH resource, the second RACH resource is a RACH resource associated with a specific RS of the fifth SFN, where
the object includes any one of the following: an SFN specific cell, a cell or TRP specific cell, or a TRP; and the first RS is an SFN specific RS, or the second RS is a cell or TRP specific RS.

Optionally, the second RACH resource is configured by using any one of the following: the SFN specific SI or the cell or TRP specific SI.

Optionally, in a case that a first condition is met, the first operation includes: ending the RACH process.

Optionally, that the first condition is met includes at least one of the following:
a RACH resource associated with a second RS is used in the first RACH process; or
RACH resources configured by using second SI corresponding to different objects are different or independent, where
the second RS is a cell or TRP specific RS; the object includes any one of the following: an SFN specific cell, a cell or TRP specific cell, or a TRP; and the second SI is cell or TRP specific SI.

Optionally, ending the RACH process includes at least one of the following:
stopping sending an uplink message in the RACH process;
stopping receiving a downlink message in the RACH process;
releasing a resource associated with the RACH process; or
stopping or resetting a timer and a counter associated with the RACH process.

Optionally, in a case that a second condition is met, the first operation includes: ending the first RACH process and starting to perform a second RACH process.

Optionally, that the second condition is met includes at least one of the following:
a RACH resource associated with a second RS is used in the first RACH process; or
RACH resources configured by using second SI corresponding to different objects are different or independent, where
the second RS is a cell or TRP specific RS; the object includes any one of the following: an SFN specific cell, a cell or TRP specific cell, or a TRP; and the second SI is cell or TRP specific SI.

Optionally, in a case that a third condition is met, the first operation includes: continuing performing the first RACH process.

Optionally, that the third condition is met includes at least one of the following:
a RACH resource associated with a first RS is used in the first RACH process; or
a RACH resource used in the first RACH process is coordinated and determined by the at least one SFN or an object in an SFN range, where
the first RS is an SFN specific RS.

Optionally, the random access apparatus 700 further includes:
a first obtaining module, configured to obtain a candidate RACH resource according to first information; and
a second execution module, configured to perform the first RACH process according to the candidate RACH resource, where
the first information includes at least one of the following: cell or TRP specific SI; SFN specific SI; a radio resource control RRC message; or a paging paging message.

Optionally, the candidate RACH resource includes at least one of the following: a RACH resource associated with a cell or TRP specific RS, or a RACH resource associated with an SFN specific RS.

Optionally, the second execution module includes:
a first selection unit, configured to select a third RACH resource from the candidate RACH resource according to second information; and
a first execution unit, configured to perform the first RACH process according to the third RACH resource, where
the second information includes at least one of the following: a preset rule, a measurement result of a cell or TRP specific RS, or a measurement result of an SFN specific RS.

Optionally, the random access apparatus 700 further includes:
a third execution module, configured to perform a second operation in a case of moving in the at least one single frequency network SFN during execution of the first random access channel RACH process performed by the terminal, where
the second operation includes at least one of the following:
   receiving cell or TRP specific SI;
   receiving SFN specific SI;
   receiving a cell or TRP specific RS; or
   receiving an SFN specific RS.

Optionally, the random access apparatus 700 further includes:
a receiving module, configured to receive a cell or TRP specific RS according to third information, where
the third information includes at least one of the following: a Paging message, SI corresponding to a cell or a TRP, or SI corresponding to an SFN.

Optionally, in a case that a high frequency range and a low frequency range are deployed for a network, the SFN specific cell includes a cell in the low frequency range, and the cell or TRP specific cell includes a cell in the high frequency range; or
in a case that the network includes a satellite communication network, the SFN specific cell includes a high altitude platform station HAPS cell or a high-earth orbit satellite cell, and the cell or TRP specific cell includes a low-earth orbit satellite cell or a ground base station-covered cell.

The random access apparatus in the embodiments of this application may be an apparatus, or may be a component, an integrated circuit, or a chip in the terminal. The apparatus may be a mobile terminal or may be a non-mobile terminal. Exemplarily, the mobile terminal may include but is not limited to a type of the terminal 11 listed above, and the non-mobile terminal may be a server, a network attached storage (Network Attached Storage, NAS), a personal computer (personal computer, PC), a television (television, TV), a teller machine, a self-service machine, or the like. This is not specifically limited in the embodiments of this application.

The random access apparatus in the embodiments of this application may be an apparatus having an operating system. The operating system may be an Android (Android) operating system, may be an ios operating system, or may be another possible operating system, and is not specifically limited in the embodiments of this application.

The random access apparatus 700 provided in the embodiments of this application can implement the processes implemented in the method embodiment in FIG. 5 and achieve the same technical effect. To avoid repetition, details are not described herein again.

It is to be noted that, an execution entity of the random access method provided in the embodiments of this application may be a random access apparatus, or may be a control module in the random access apparatus for performing the random access method. The random access apparatus provided in the embodiments of this application is described in the embodiments of this application by using an example in which the random access apparatus performs the random access method.

Referring to FIG. 8, FIG. 8 is a second structural diagram of a random access apparatus according to an embodiment of this application.

As shown in FIG. 8, the random access apparatus 800 includes:
a fourth execution module 801, configured to perform a first operation in a case of moving in at least one single frequency network SFN during execution of a first random access channel RACH process performed by the terminal, where
the first operation includes any one of the following:
   continuing performing the first RACH process;
   ending the first RACH process and starting to perform a second RACH process; or
   ending the RACH process.

Optionally, moving in the at least one SFN includes any one of the following:
moving from a first object to a second object in a first SFN;
moving from a second SFN to a third SFN, and accessing, by the terminal, an SFN layer; or
moving from a third object in a fourth SFN to a fourth object in a fifth SFN, where
the object includes any one of the following: an SFN specific cell, a cell or transmission reception point TRP specific cell, or a TRP.

Optionally, the fourth execution module 801 is specifically configured to:
perform the first operation in a case that a reference signal RS sent by the network side device includes an SFN specific RS.

Optionally, the continuing performing the first RACH process includes:
continuing performing the first RACH process according to a first RACH resource.

Optionally, in a case that moving in the at least one SFN includes moving from the first object to the second object in the first SFN, the first RACH resource meets any one of the following:
in a case that an RS sent by the network side device includes a first RS and a second RS, and the first RS is not associated with a RACH resource, the first RACH resource is any one of the following: a RACH resource corresponding to the second object or a RACH resource corresponding to the first object;
in a case that an RS sent by the network side device includes a first RS and a second RS, and the first RS is associated with a RACH resource, the first RACH resource is any one of the following: a RACH resource associated with a specific RS of the first SFN, a RACH resource corresponding to the second object, or a RACH resource corresponding to the first object; or
in a case that an RS sent by the network side device includes only a first RS, and the first RS is associated with a RACH resource, the first RACH resource is a RACH resource associated with a specific RS of the first SFN, where
the object includes any one of the following: an SFN specific cell, a cell or TRP specific cell, or a TRP; and the first RS is an SFN specific RS, or the second RS is a cell or TRP specific RS.

Optionally, in a case that moving in the at least one SFN includes moving from the second SFN to the third SFN, and accessing the SFN layer by the terminal, the first RACH resource meets any one of the following:
in a case that an RS sent by the network side device includes a first RS and a second RS, and the first RS is not associated with a RACH resource, the first RACH resource is any one of the following: a RACH resource configured by using target system information SI in the second SFN or a RACH resource configured by using target SI in the third SFN; or
in a case that an RS sent by the network side device includes a first RS, and the first RS is associated with a RACH resource, the first RACH resource is any one of the following: a RACH resource associated with a specific RS of the second SFN or a RACH resource associated with a specific RS of the third SFN, where
the first RS is an SFN specific RS, or the second RS is a cell or TRP specific RS; and the target SI is SFN specific SI or cell or TRP specific SI.

Optionally, in a case that moving in the at least one SFN includes moving from the third object in the fourth SFN to the fourth object in the fifth SFN, the first RACH resource meets any one of the following:
in a case that an RS sent by the network side device includes a first RS and a second RS, and the first RS is not associated with a RACH resource, the first RACH resource is any one of the following: a RACH resource corresponding to the third object or a RACH resource corresponding to the fourth object;
in a case that an RS sent by the network side device includes a first RS and a second RS, and the first RS is associated with a RACH resource, the first RACH resource is any one of the following: a RACH resource associated with a specific RS of the fourth SFN, a RACH resource associated with a specific RS of the fifth SFN, a RACH resource corresponding to the third object, or a RACH resource corresponding to the fourth object; or
in a case that an RS sent by the network side device includes only a first RS, and the first RS is associated with a RACH resource, the first RACH resource is any one of the following: a RACH resource associated with a specific RS of the fourth SFN or a RACH resource associated with a specific RS of the fifth SFN, where
the object includes any one of the following: an SFN specific cell, a cell or TRP specific cell, or a TRP; and the first RS is an SFN specific RS, or the second RS is a cell or TRP specific RS.

Optionally, the first RACH resource is configured by using any one of the following: the SFN specific SI or the cell or TRP specific SI.

Optionally, starting to perform the second RACH process includes:
starting to perform the second RACH process according to a second RACH resource.

Optionally, in a case that moving in the at least one SFN includes moving from the first object to the second object in the first SFN, the second RACH resource meets any one of the following:
in a case that an RS sent by the network side device includes a first RS and a second RS, and the first RS is not associated with a RACH resource, the second RACH resource is a RACH resource corresponding to the second object;
in a case that an RS sent by the network side device includes a first RS and a second RS, and the first RS is associated with a RACH resource, the second RACH resource is any one of the following: a RACH resource associated with a specific RS of the first SFN or a RACH resource corresponding to the second object; or
in a case that an RS sent by the network side device includes only a first RS, and the first RS is associated with a RACH resource, the second RACH resource is a RACH resource associated with a specific RS of the first SFN, where
the object includes any one of the following: an SFN specific cell, a cell or TRP specific cell, or a TRP; and the first RS is an SFN specific RS, or the second RS is a cell or TRP specific RS.

Optionally, in a case that moving in the at least one SFN includes moving from the second SFN to the third SFN, and accessing the SFN layer by the terminal, the second RACH resource meets any one of the following:
in a case that an RS sent by the network side device includes a first RS and a second RS, and the first RS is not associated with a RACH resource, the second RACH resource is a RACH resource configured by using target SI in the third SFN;
in a case that an RS sent by the network side device includes a first RS, and the first RS is associated with a RACH resource, the second RACH resource is a RACH resource associated with a specific RS of the third SFN, where
the first RS is an SFN specific RS, or the second RS is a cell or TRP specific RS; and the target SI is SFN specific SI or cell or TRP specific SI.

Optionally, in a case that moving in the at least one SFN includes moving from the third object in the fourth SFN to the fourth object in the fifth SFN, the second RACH resource meets any one of the following:
in a case that an RS sent by the network side device includes a first RS and a second RS, and the first RS is not associated with a RACH resource, the second RACH resource is a RACH resource corresponding to the fourth object;
in a case that an RS sent by the network side device includes a first RS and a second RS, and the first RS is associated with a RACH resource, the second RACH resource is any one of the following: a RACH resource associated with a specific RS of the fifth SFN or a RACH resource corresponding to the fourth object; or
in a case that an RS sent by the network side device includes only a first RS, and the first RS is associated with a RACH resource, the second RACH resource is a RACH resource associated with a specific RS of the fifth SFN, where
the object includes any one of the following: an SFN specific cell, a cell or TRP specific cell, or a TRP; and the first RS is an SFN specific RS, or the second RS is a cell or TRP specific RS.

Optionally, the second RACH resource is configured by using any one of the following: the SFN specific SI or the cell or TRP specific SI.

Optionally, in a case that a first condition is met, the first operation includes: ending the RACH process.

Optionally, that the first condition is met includes at least one of the following:
a RACH resource associated with a second RS is used in the first RACH process; or
RACH resources configured by using second SI corresponding to different objects are different or independent, where
the second RS is a cell or TRP specific RS; the object includes any one of the following: an SFN specific cell, a cell or TRP specific cell, or a TRP; and the second SI is cell or TRP specific SI.

Optionally, ending the RACH process includes at least one of the following:
stopping receiving an uplink message in the RACH process;
stopping sending a downlink message in the RACH process;
releasing a resource associated with the RACH process; or
stopping or resetting a timer and a counter associated with the RACH process.

Optionally, in a case that a second condition is met, the first operation includes: ending the first RACH process and starting to perform a second RACH process.

Optionally, that the second condition is met includes at least one of the following:
a RACH resource associated with a second RS is used in the first RACH process; or
RACH resources configured by using second SI corresponding to different objects are different or independent, where
the second RS is a cell or TRP specific RS; the object includes any one of the following: an SFN specific cell, a cell or TRP specific cell, or a TRP; and the second SI is cell or TRP specific SI.

Optionally, in a case that a third condition is met, the first operation includes: continuing performing the first RACH process.

Optionally, that the third condition is met includes at least one of the following:
a RACH resource associated with a first RS is used in the first RACH process; or
a RACH resource used in the first RACH process is coordinated and determined by the at least one SFN or an object in an SFN range, where
the first RS is an SFN specific RS.

Optionally, the random access apparatus 800 further includes:
a second obtaining module, configured to obtain a candidate RACH resource according to first information; and
a fifth execution module, configured to perform the first RACH process according to the candidate RACH resource, where
the first information includes at least one of the following: cell or TRP specific SI; SFN specific SI; a radio resource control RRC message; or a paging paging message.

Optionally, the candidate RACH resource includes at least one of the following: a RACH resource associated with a cell or TRP specific RS, or a RACH resource associated with an SFN specific RS.

Optionally, the fifth execution module includes:
a second selection unit, configured to select a third RACH resource from the candidate RACH resource according to second information; and
a second execution unit, configured to perform the first RACH process according to the third RACH resource, where
the second information includes at least one of the following: a preset rule, a measurement result of a cell or TRP specific RS, or a measurement result of an SFN specific RS.

Optionally, the random access apparatus 800 further includes:
a sixth execution module, configured to perform a second operation in a case of moving in the at least one single frequency network SFN during execution of the first random access channel RACH process performed by the terminal, where
the second operation includes at least one of the following:
   sending cell or TRP specific SI; or
   sending SFN specific SI;
   sending cell or TRP specific RS; or
   sending an SFN specific RS.

Optionally, the random access apparatus 800 further includes:
a sending module, configured to send a cell or TRP specific RS according to third information, where
the third information includes at least one of the following: a Paging message, SI corresponding to a cell or a TRP, or SI corresponding to an SFN.

Optionally, in a case that a high frequency range and a low frequency range are deployed for a network, the SFN specific cell includes a cell in the low frequency range, and the cell or TRP specific cell includes a cell in the high frequency range; or
in a case that the network includes a satellite communication network, the SFN specific cell includes a high altitude platform station HAPS cell or a high-earth orbit satellite cell, and the cell or TRP specific cell includes a low-earth orbit satellite cell or a ground base station-covered cell.

The random access apparatus in the embodiments of this application may be an apparatus, or may be a component, an integrated circuit, or a chip in the network side device. The network side device may be but is not limited to the network side device 12. This is not specifically limited in the embodiments of this application.

The random access apparatus 800 provided in the embodiments of this application can implement the processes implemented in the method embodiment in FIG. 6 and achieve the same technical effect. To avoid repetition, details are not described herein again.

Optionally, as shown in FIG. 9, an embodiment of this application further provides a communication device 900, including a processor 901, a memory 902, and a program or instructions stored in the memory 902 and executable on the processor 901. For example, in a case that the communication device 900 is a terminal, the program or instructions is executed on the processor 901 to implement the processes of the method embodiment shown in FIG. 5, and the same technical effects can be achieved. In a case that the communication device 900 is a network side device, the program or instructions is executed on the processor 901 to implement the processes of the method embodiment shown in FIG. 6, and the same technical effects can be achieved. To avoid repetition, details are not described herein again.

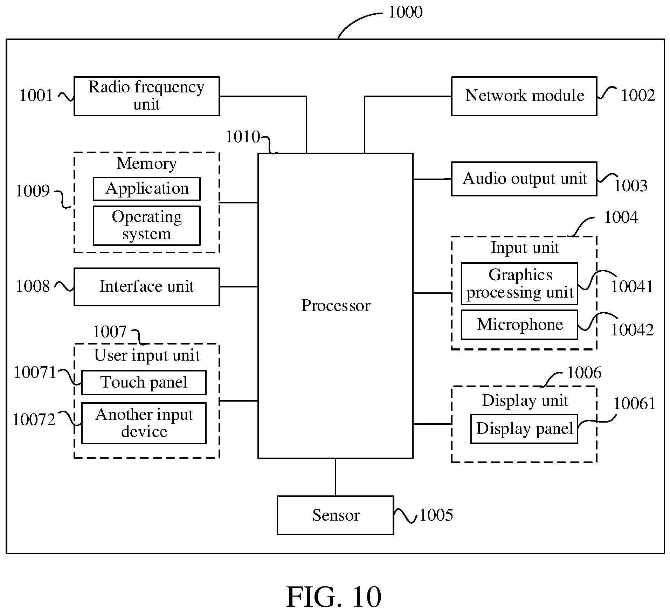

FIG. 10 is a schematic diagram of a hardware structure of a terminal according to an embodiment of this application.

The terminal 1000 includes, but is not limited to, components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

A person skilled in the art may understand that, the terminal 1000 may further include a power supply (such as a battery) for supplying power to the components. Preferably, the power supply may be logically connected to the processor 1010 by using a power management system, thereby implementing functions such as charging, discharging, and power consumption management by using the power management system. A terminal structure shown in FIG. 10 does not constitute a limitation to the terminal, and the terminal may include more or fewer components than those shown in the figure, or some components may be combined, or a different component deployment may be used. Details are not described herein again.

It may be understood that, in the embodiments of this application, the input unit 1004 may include a graphics processing unit (Graphics Processing Unit, GPU) 10041 and a microphone 10042. The graphics processing unit 10041 processes image data of a static picture or a video obtained by an image capturing apparatus (for example, a camera) in a video capturing mode or an image capturing mode. The display unit 1006 may include a display panel 10061, for example, a display panel 10061 configured in a form such as a liquid crystal display or an organic light-emitting diode. The user input unit 1007 includes a touch panel 10071 and another input device 10072. The touch panel 10071 is also referred to as a touchscreen. The touch panel 10071 may include two parts: a touch detection apparatus and a touch controller, the another input device 10072 may include, but is not limited to, a physical keyboard, a functional key (such as a volume control key or a switch key), a track ball, a mouse, and a joystick, and the details will not be described herein again.

In this embodiment of this application, the radio frequency unit 1001 receives downlink data from a network side device and sends the data to the processor 1010 for processing; and sends uplink data to the network side device. Generally, the radio frequency unit 1001 includes, but is not limited to, an antenna, at least one amplifier, a transceiver, a coupler, a low noise amplifier, a duplexer, and the like.

The memory 1009 may be configured to store a software program or instructions and various data. The memory 1009 may mainly include a program storage or instruction area and a data storage area. The program storage or instruction area may store an operating system, an application program or instructions required by at least one function (for example, a sound playback function and an image playback function), or the like. In addition, the memory 1009 may include a high speed RAM, and may further include a non-volatile memory. The non-volatile memory may be a read-only memory (read-only memory, ROM), a programmable ROM (programmable ROM, PROM), an erasable programmable read-only memory (erasable PROM, EPROM), an electrically EPROM (electrically EPROM, EEPROM), or a flash memory. For example, at least one magnetic disk storage device, a flash memory device, or another non-volatile solid-state storage device.

Optionally, the processor 1010 may include one or more processing units. Optionally, the processor 1010 may integrate an application processor and a modem processor. The application processor mainly processes an operating system, a user interface, an application program or instructions, and the like. The modem processor mainly processes wireless communication, for example, a baseband processor. It may be understood that the foregoing modem processor may not be integrated into the processor 1010.

The processor 1010 is configured to:
perform a first operation in a case of moving in at least one single frequency network SFN during execution of a first random access channel RACH process performed by a terminal, where
the first operation includes any one of the following:
   continuing performing the first RACH process;
   ending the first RACH process and starting to perform a second RACH process; or
   ending the RACH process.

Optionally, moving in the at least one SFN includes any one of the following:
moving from a first object to a second object in a first SFN;
moving from a second SFN to a third SFN, and accessing, by the terminal, an SFN layer; or
moving from a third object in a fourth SFN to a fourth object in a fifth SFN, where
the object includes any one of the following: an SFN specific cell, a cell or transmission reception point TRP specific cell, or a TRP.

Optionally, the processor 1010 is specifically configured to:
perform the first operation in a case that a reference signal RS received by the terminal includes an SFN specific RS.

Optionally, the continuing performing the first RACH process includes:
continuing performing the first RACH process according to a first RACH resource.

Optionally, in a case that moving in the at least one SFN includes moving from the first object to the second object in the first SFN, the first RACH resource meets any one of the following:
in a case that an RS received by the terminal includes a first RS and a second RS, and the first RS is not associated with a RACH resource, the first RACH resource is any one of the following: a RACH resource corresponding to the second object or a RACH resource corresponding to the first object;
in a case that an RS received by the terminal includes a first RS and a second RS, and the first RS is associated with a RACH resource, the first RACH resource is any one of the following: a RACH resource associated with a specific RS of the first SFN, a RACH resource corresponding to the second object, or a RACH resource corresponding to the first object; or
in a case that an RS received by the terminal includes only a first RS, and the first RS is associated with a RACH resource, the first RACH resource is a RACH resource associated with a specific RS of the first SFN, where
the object includes any one of the following: an SFN specific cell, a cell or TRP specific cell, or a TRP; and the first RS is an SFN specific RS, or the second RS is a cell or TRP specific RS.

Optionally, in a case that moving in the at least one SFN includes moving from the second SFN to the third SFN, and accessing the SFN layer by the terminal, the first RACH resource meets any one of the following:
in a case that an RS received by the terminal includes a first RS and a second RS, and the first RS is not associated with a RACH resource, the first RACH resource is any one of the following: a RACH resource configured by using target system information SI in the second SFN or a RACH resource configured by using target SI in the third SFN; or
in a case that an RS received by the terminal includes a first RS, and the first RS is associated with a RACH resource, the first RACH resource is any one of the following: a RACH resource associated with a specific RS of the second SFN or a RACH resource associated with a specific RS of the third SFN, where
the first RS is an SFN specific RS, or the second RS is a cell or TRP specific RS; and the target SI is SFN specific SI or cell or TRP specific SI.

Optionally, in a case that moving in the at least one SFN includes moving from the third object in the fourth SFN to the fourth object in the fifth SFN, the first RACH resource meets any one of the following:
in a case that an RS received by the terminal includes a first RS and a second RS, and the first RS is not associated with a RACH resource, the first RACH resource is any one of the following: a RACH resource corresponding to the third object or a RACH resource corresponding to the fourth object;
in a case that an RS received by the terminal includes a first RS and a second RS, and the first RS is associated with a RACH resource, the first RACH resource is any one of the following: a RACH resource associated with a specific RS of the fourth SFN, a RACH resource associated with a specific RS of the fifth SFN, a RACH resource corresponding to the third object, or a RACH resource corresponding to the fourth object; or
in a case that an RS received by the terminal includes only a first RS, and the first RS is associated with a RACH resource, the first RACH resource is any one of the following: a RACH resource associated with a specific RS of the fourth SFN or a RACH resource associated with a specific RS of the fifth SFN, where
the object includes any one of the following: an SFN specific cell, a cell or TRP specific cell, or a TRP; and the first RS is an SFN specific RS, or the second RS is a cell or TRP specific RS.

Optionally, the first RACH resource is configured by using any one of the following: the SFN specific SI or the cell or TRP specific SI.

Optionally, starting to perform the second RACH process includes:
starting to perform the second RACH process according to a second RACH resource.

Optionally, in a case that moving in the at least one SFN includes moving from the first object to the second object in the first SFN, the second RACH resource meets any one of the following:
in a case that an RS received by the terminal includes a first RS and a second RS, and the first RS is not associated with a RACH resource, the second RACH resource is a RACH resource corresponding to the second object;
in a case that an RS received by the terminal includes a first RS and a second RS, and the first RS is associated with a RACH resource, the second RACH resource is any one of the following: a RACH resource associated with a specific RS of the first SFN or a RACH resource corresponding to the second object; or
in a case that an RS received by the terminal includes only a first RS, and the first RS is associated with a RACH resource, the second RACH resource is a RACH resource associated with a specific RS of the first SFN, where
the object includes any one of the following: an SFN specific cell, a cell or TRP specific cell, or a TRP; and the first RS is an SFN specific RS, or the second RS is a cell or TRP specific RS.

Optionally, in a case that moving in the at least one SFN includes moving from the second SFN to the third SFN, and accessing the SFN layer by the terminal, the second RACH resource meets any one of the following:
in a case that an RS received by the terminal includes a first RS and a second RS, and the first RS is not associated with a RACH resource, the second RACH resource is a RACH resource configured by using target SI in the third SFN;
in a case that an RS received by the terminal includes a first RS, and the first RS is associated with a RACH resource, the second RACH resource is a RACH resource associated with a specific RS of the third SFN, where
the first RS is an SFN specific RS, or the second RS is a cell or TRP specific RS; and the target SI is SFN specific SI or cell or TRP specific SI.

Optionally, in a case that moving in the at least one SFN includes moving from the third object in the fourth SFN to the fourth object in the fifth SFN, the second RACH resource meets any one of the following:
in a case that an RS received by the terminal includes a first RS and a second RS, and the first RS is not associated with a RACH resource, the second RACH resource is a RACH resource corresponding to the fourth object;
in a case that an RS received by the terminal includes a first RS and a second RS, and the first RS is associated with a RACH resource, the second RACH resource is any one of the following: a RACH resource associated with a specific RS of the fifth SFN or a RACH resource corresponding to the fourth object; or
in a case that an RS received by the terminal includes only a first RS, and the first RS is associated with a RACH resource, the second RACH resource is a RACH resource associated with a specific RS of the fifth SFN, where
the object includes any one of the following: an SFN specific cell, a cell or TRP specific cell, or a TRP; and the first RS is an SFN specific RS, or the second RS is a cell or TRP specific RS.

Optionally, the second RACH resource is configured by using any one of the following: the SFN specific SI or the cell or TRP specific SI.

Optionally, in a case that a first condition is met, the first operation includes: ending the RACH process.

Optionally, that the first condition is met includes at least one of the following:
a RACH resource associated with a second RS is used in the first RACH process; or
RACH resources configured by using second SI corresponding to different objects are different or independent, where
the second RS is a cell or TRP specific RS; the object includes any one of the following: an SFN specific cell, a cell or TRP specific cell, or a TRP; and the second SI is cell or TRP specific SI.

Optionally, ending the RACH process includes at least one of the following:
stopping sending an uplink message in the RACH process;
stopping receiving a downlink message in the RACH process;
releasing a resource associated with the RACH process; or
stopping or resetting a timer and a counter associated with the RACH process.

Optionally, in a case that a second condition is met, the first operation includes: ending the first RACH process and starting to perform a second RACH process.

Optionally, that the second condition is met includes at least one of the following:
a RACH resource associated with a second RS is used in the first RACH process; or
RACH resources configured by using second SI corresponding to different objects are different or independent, where
the second RS is a cell or TRP specific RS; the object includes any one of the following: an SFN specific cell, a cell or TRP specific cell, or a TRP; and the second SI is cell or TRP specific SI.

Optionally, in a case that a third condition is met, the first operation includes: continuing performing the first RACH process.

Optionally, that the third condition is met includes at least one of the following:
a RACH resource associated with a first RS is used in the first RACH process; or
a RACH resource used in the first RACH process is coordinated and determined by the at least one SFN or an object in an SFN range, where
the first RS is an SFN specific RS.

Optionally, the processor 1010 is configured to:
obtain a candidate RACH resource according to first information; and
perform the first RACH process according to the candidate RACH resource, where
the first information includes at least one of the following: cell or TRP specific SI; SFN specific SI; a radio resource control RRC message; or a paging paging message.

Optionally, the candidate RACH resource includes at least one of the following: a RACH resource associated with a cell or TRP specific RS, or a RACH resource associated with an SFN specific RS.

Optionally, the processor 1010 is configured to:
select a third RACH resource from the candidate RACH resource according to second information; and
perform the first RACH process according to the third RACH resource, where
the second information includes at least one of the following: a preset rule, a measurement result of a cell or TRP specific RS, or a measurement result of an SFN specific RS.

Optionally, the radio frequency unit 1001 is configured to:
perform a second operation in a case of moving in the at least one single frequency network SFN during execution of the first random access channel RACH process performed by the terminal, where
the second operation includes at least one of the following:
   receiving cell or TRP specific SI;
   receiving SFN specific SI;
   receiving a cell or TRP specific RS; or
   receiving an SFN specific RS.

Optionally, the radio frequency unit 1001 is configured to:
receive a cell or TRP specific RS according to third information, where
the third information includes at least one of the following: a Paging message, SI corresponding to a cell or a TRP, or SI corresponding to an SFN.

Optionally, in a case that a high frequency range and a low frequency range are deployed for a network, the SFN specific cell includes a cell in the low frequency range, and the cell or TRP specific cell includes a cell in the high frequency range; or
in a case that the network includes a satellite communication network, the SFN specific cell includes a high altitude platform station HAPS cell or a high-earth orbit satellite cell, and the cell or TRP specific cell includes a low-earth orbit satellite cell or a ground base station-covered cell.

It is to be noted that, the terminal 1000 in this embodiment may implement the processes in the method embodiment in FIG. 5 in the embodiments of the present invention and achieve the same beneficial effects. To avoid repetition, details are not described herein again.

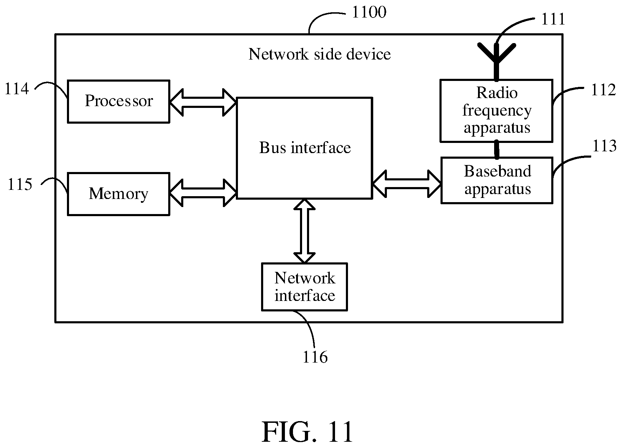

Specifically, an embodiment of this application further provides a network side device. As shown in FIG. 11, the network device 1100 includes an antenna 111, a radio frequency apparatus 112, and a baseband apparatus 113. The antenna 111 is connected to the radio frequency apparatus 112. In an uplink direction, the radio frequency apparatus 112 receives information by using the antenna 111, and sends the received information to the baseband apparatus 113 for processing. In a downlink direction, the baseband apparatus 113 processes to-be-processed information, and sends the information to the radio frequency apparatus 112. The radio frequency apparatus 112 processes received information and sends the information by using the antenna 111.

The frequency band processing apparatus may be located in the baseband apparatus 113, and the method performed by the network side device in the foregoing embodiments may be implemented in the baseband apparatus 113. The baseband apparatus 113 includes a processor 114 and a memory 115.

The baseband apparatus 113 may include, for example, at least one baseband plate. A plurality of chips are arranged on the baseband plate. As shown in FIG. 11, one of the plurality of chips is, for example, the processor 114, and is connected to the memory 115, to invoke a program in the memory 115 to perform operations performed by the network side device in the foregoing method embodiment.

The baseband apparatus 113 may further comprise a network interface 116, configured to exchange information with the radio frequency apparatus 112. The interface is, for example, a common public radio interface (common public radio interface, CPRI).

Specifically, the network side device in this embodiment of the present invention further includes: instructions or a program stored in the memory 115 and executable on the processor 114, and the processor 114 invokes the instructions or program in the memory 115 to perform the processes in the method embodiment in FIG. 6, and can achieve the same technical effect. To avoid repetition, details are not described herein again.

An embodiment of the present invention further provides a readable storage medium, storing a program or instructions, the program or instructions, when executed on a processor, implementing the processes of the embodiments of the random access method, and achieving the same technical effect. To avoid repetition, details are not described herein again. The readable storage medium may include a flash drive, a read-only memory (Read-Only Memory, ROM), a random access memory (Random Access Memory, RAM), a magnetic disk, or an optical disc.

An embodiment of this application further provides a readable storage medium, storing a program or instructions, the program or instructions, when executed on a processor, implementing the processes of the method embodiments in FIG. 5 or FIG. 6, and achieving the same technical effect. To avoid repetition, details are not described herein again.

The processor is a processor in the terminal in the foregoing embodiments. The readable storage medium includes a readable storage medium, for example, a read-only memory (Read-Only Memory, ROM), a random access memory (Random Access Memory, RAM), a magnetic disk, an optical disk, or the like.

An embodiment of this application further provides a chip, including a processor and a communication interface coupled to each other, the processor being configured to run a program or instructions of the network side device to implement the processes of the method embodiments in FIG. 5 or FIG. 6, and can achieve the same technical effects. To avoid repetition, details are not described herein again.

It should be understood that, the chip mentioned in this embodiment of this application may also be referred to as a system-level chip, a system chip, a chip system, a system on chip, or the like.

It is to be noted that, the term "include", "comprise", or any other variation thereof in this specification is intended to cover a non-exclusive inclusion, which specifies the presence of stated processes, methods, objects, or apparatuses, but does not preclude the presence or addition of one or more other processes, methods, objects, or apparatuses. Without more limitations, elements defined by the sentence "including one" does not exclude that there are still other same elements of the RS received by the terminal in the processes, methods, objects, or apparatuses. In addition, it is to be noted that, the scope of the method and the apparatus in the implementations of this application is not limited to executing functions in an order shown or discussed, and may also include executing the functions in a substantially simultaneous manner or in a reverse order according to involved functions. For example, the described method may be performed in an order different from that described order, and various steps may also be added, omitted, or combined. In addition, features described with reference to some examples may also be combined in other examples.

A person of ordinary skill in the art may be aware that the units and steps in the examples described with reference to the embodiments disclosed in this specification can be implemented by electronic hardware or a combination of computer software and electronic hardware. Whether the functions are executed in a mode of hardware or software depends on particular applications and design constraint conditions of the technical solutions. A person skilled in the art may use different methods to implement the described functions for each particular application, but it should not be considered that the implementation goes beyond the scope of the present disclosure.

A person skilled in the art may clearly understand that for convenience and conciseness of description, for specific working processes of the foregoing described system, apparatus and unit, reference may be made to the corresponding processes in the foregoing method embodiments, and details are not described herein.

In the embodiments provided in this application, it is to be understood that the disclosed apparatus and method may be implemented in other manners. For example, the described apparatus embodiment is merely exemplary. For example, the unit division is merely a logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separated, and the components displayed as units may or may not be physical units, and may be located in one place or may be distributed over a plurality of network units. Some or all of the units may be selected according to actual needs to achieve the objectives of the solutions of the embodiments.

In addition, functional units in the embodiments of the present disclosure may be integrated into one processing unit, or each of the units may exist alone physically, or two or more units may be integrated into one unit.

Through the foregoing description on the implementations, a person skilled in the art can clearly learn that the foregoing embodiment methods may be implemented by using software in combination with a necessary universal hardware platform. Certainly, the embodiment methods may also be implemented by using hardware, but the former is a better implementation in many cases. Based on such an understanding, the technical solutions of this application essentially or the part contributing to the related art may be implemented in the form of a software product. The computer software product is stored in a storage medium (such as a read-only memory (ROM)/random access memory (RAM), a magnetic disk, or an optical disc), and includes several instructions for instructing a terminal (which may be a mobile phone, a computer, a server, an air conditioner, a network device, or the like) to perform the method described in the embodiments of this application.

It may be understood that the embodiments described in the embodiments of the present disclosure may be implemented by hardware, software, firmware, middleware, microcode, or a combination thereof. For hardware implementation, the module, unit, and subunit may be implemented by one or more application-specific integrated circuits (Application Specific Integrated Circuits, ASICs), digital signal processors (Digital Signal Processors, DSPs), digital signal processor devices (DSP Devices, DSPDs), programmable logic devices (Programmable Logic Devices, PLDs), field programmable gate arrays (Field-Programmable Gate Arrays, FPGAs), general-purpose processors, controllers, microcontrollers, microprocessors, other electronic components configured to implement the functions of the present disclosure, or a combination thereof.

For software implementation, the technology described in the embodiments of the present disclosure may be implemented by using modules (for example, processes and functions) implementing the functions of the embodiments of the present disclosure. Software code may be stored in a memory and executed on a processor. The memory may be implemented in the processor or outside the processor.

The embodiments of this application are described above with reference to the accompanying drawings. However, this application is not limited to the foregoing specific implementations. The foregoing specific implementations are merely illustrative rather than limitative. A person of ordinary skill in the art may derive various forms from this application without departing from the spirit of this application and the scope claimed by the claims, which are all under the protection of this application.

## Claims

1. A random access method, performed by a terminal and comprising:
performing a first operation in a case of moving in at least one single frequency network SFN during execution of a first random access channel RACH process performed by the terminal, wherein
the first operation comprises any one of the following:
continuing performing the first RACH process;
ending the first RACH process and starting to perform a second RACH process; or
ending the RACH process.

2. The method according to claim 1, wherein moving in the at least one SFN comprises any one of the following:
moving from a first object to a second object in a first SFN;
moving from a second SFN to a third SFN, and accessing, by the terminal, an SFN layer; or
moving from a third object in a fourth SFN to a fourth object in a fifth SFN, wherein
the object comprises any one of the following: an SFN specific cell, a cell or transmission reception point TRP specific cell, or a TRP.

3. The method according to claim 1, wherein performing the first operation comprises:
performing the first operation in a case that a reference signal RS received by the terminal comprises an SFN specific RS.

4. The method according to claim 1, wherein the continuing performing the first RACH process comprises:
continuing performing the first RACH process according to a first RACH resource.

5. The method according to claim 4, wherein in a case that moving in the at least one SFN comprises moving from a first object to a second object in a first SFN, the first RACH resource meets any one of the following:
in a case that an RS received by the terminal comprises a first RS and a second RS, and the first RS is not associated with a RACH resource, that the first RACH resource is any one of the following: a RACH resource corresponding to the second object or a RACH resource corresponding to the first object;
in a case that an RS received by the terminal comprises a first RS and a second RS, and the first RS is associated with a RACH resource, that the first RACH resource is any one of the following: a RACH resource associated with a specific RS of the first SFN, a RACH resource corresponding to the second object, or a RACH resource corresponding to the first object; or
in a case that an RS received by the terminal comprises only a first RS, and the first RS is associated with a RACH resource, the first RACH resource is a RACH resource associated with a specific RS of the first SFN, wherein
the object comprises any one of the following: an SFN specific cell, a cell or TRP specific cell, or a TRP; and the first RS is an SFN specific RS, or the second RS is a cell or TRP specific RS.

6. The method according to claim 4, wherein in a case that moving in the at least one SFN comprises moving from a second SFN to a third SFN, and accessing, by the terminal, an SFN layer, the first RACH resource meets any one of the following:
in a case that an RS received by the terminal comprises a first RS and a second RS, and the first RS is not associated with a RACH resource, that the first RACH resource is any one of the following: a RACH resource configured by using target system information SI in the second SFN or a RACH resource configured by using target SI in the third SFN; or
in a case that an RS received by the terminal comprises a first RS, and the first RS is associated with a RACH resource, that the first RACH resource is any one of the following: a RACH resource associated with a specific RS of the second SFN or a RACH resource associated with a specific RS of the third SFN, wherein
the first RS is an SFN specific RS, or the second RS is a cell or TRP specific RS; and the target SI is SFN specific SI or cell or TRP specific SI.

7. The method according to claim 4, wherein in a case that moving in the at least one SFN comprises moving from a third object in a fourth SFN to a fourth object in a fifth SFN, the first RACH resource meets any one of the following:
in a case that an RS received by the terminal comprises a first RS and a second RS, and the first RS is not associated with a RACH resource, that the first RACH resource is any one of the following: a RACH resource corresponding to the third object or a RACH resource corresponding to the fourth object;
in a case that an RS received by the terminal comprises a first RS and a second RS, and the first RS is associated with a RACH resource, that the first RACH resource is any one of the following: a RACH resource associated with a specific RS of the fourth SFN, a RACH resource associated with a specific RS of the fifth SFN, a RACH resource corresponding to the third object, or a RACH resource corresponding to the fourth object; or
in a case that an RS received by the terminal comprises only a first RS, and the first RS is associated with a RACH resource, that the first RACH resource is any one of the following: a RACH resource associated with a specific RS of the fourth SFN or a RACH resource associated with a specific RS of the fifth SFN, wherein
the object comprises any one of the following: an SFN specific cell, a cell or TRP specific cell, or a TRP; and the first RS is an SFN specific RS, or the second RS is a cell or TRP specific RS.

8. The method according to any one of claims 4 to 7, wherein the first RACH resource is configured by using any one of the following: the SFN specific SI, the cell or TRP specific SI.

9. The method according to claim 1, wherein starting to perform the second RACH process comprises:
starting to perform the second RACH process according to a second RACH resource.

10. The method according to claim 9, wherein in a case that moving in the at least one SFN comprises moving from a first object to a second object in a first SFN, the second RACH resource meets any one of the following:
in a case that an RS received by the terminal comprises a first RS and a second RS, and the first RS is not associated with a RACH resource, that the second RACH resource is a RACH resource corresponding to the second object;
in a case that an RS received by the terminal comprises a first RS and a second RS, and the first RS is associated with a RACH resource, that the second RACH resource is any one of the following: a RACH resource associated with a specific RS of the first SFN or a RACH resource corresponding to the second object; or
in a case that an RS received by the terminal comprises only a first RS, and the first RS is associated with a RACH resource, that the second RACH resource is a RACH resource associated with a specific RS of the first SFN, wherein
the object comprises any one of the following: an SFN specific cell, a cell or TRP specific cell, or a TRP; and the first RS is an SFN specific RS, or the second RS is a cell or TRP specific RS.

11. The method according to claim 9, wherein in a case that moving in the at least one SFN comprises moving from a second SFN to a third SFN, and accessing, by the terminal, an SFN layer, the second RACH resource meets any one of the following:
in a case that an RS received by the terminal comprises a first RS and a second RS, and the first RS is not associated with a RACH resource, that the second RACH resource is a RACH resource configured by using target SI in the third SFN; or
in a case that an RS received by the terminal comprises a first RS, and the first RS is associated with a RACH resource, that the second RACH resource is a RACH resource associated with a specific RS of the third SFN, wherein
the first RS is an SFN specific RS, or the second RS is a cell or TRP specific RS; and the target SI is SFN specific SI or cell or TRP specific SI.

12. The method according to claim 9, wherein in a case that moving in the at least one SFN comprises moving from a third object in a fourth SFN to a fourth object in a fifth SFN, the second RACH resource meets any one of the following:
in a case that an RS received by the terminal comprises a first RS and a second RS, and the first RS is not associated with a RACH resource, that the second RACH resource is a RACH resource corresponding to the fourth object;
in a case that an RS received by the terminal comprises a first RS and a second RS, and the first RS is associated with a RACH resource, that the second RACH resource is any one of the following: a RACH resource associated with a specific RS of the fifth SFN or a RACH resource corresponding to the fourth object; or
in a case that an RS received by the terminal comprises only a first RS, and the first RS is associated with a RACH resource, that the second RACH resource is a RACH resource associated with a specific RS of the fifth SFN, wherein
the object comprises any one of the following: an SFN specific cell, a cell or TRP specific cell, or a TRP; and the first RS is an SFN specific RS, or the second RS is a cell or TRP specific RS.

13. The method according to any one of claims 9 to 12, wherein the second RACH resource is configured by using any one of the following: the SFN specific SI, the cell or TRP specific SI.

14. The method according to claim 1, wherein in a case that a first condition is met, the first operation comprises: ending the RACH process.

15. The method according to claim 14, wherein that the first condition is met comprises at least one of the following:
that a RACH resource associated with a second RS is used in the first RACH process; or
that RACH resources configured by using second SI corresponding to different objects are different or independent, wherein
the second RS is a cell or TRP specific RS; the object comprises any one of the following: an SFN specific cell, a cell or TRP specific cell, or a TRP; and the second SI is cell or TRP specific SI.

16. The method according to claim 1, wherein ending the RACH process comprises at least one of the following:
stopping sending an uplink message in the RACH process;
stopping receiving a downlink message in the RACH process;
releasing a resource associated with the RACH process; or
stopping or resetting a timer and a counter associated with the RACH process.

17. The method according to claim 1, wherein in a case that a second condition is met, the first operation comprises: ending the first RACH process and starting to perform the second RACH process.

18. The method according to claim 17, wherein that the second condition is met comprises at least one of the following:
that a RACH resource associated with a second RS is used in the first RACH process; or
that RACH resources configured by using second SI corresponding to different objects are different or independent, wherein
the second RS is a cell or TRP specific RS; the object comprises any one of the following: an SFN specific cell, a cell or TRP specific cell, or a TRP; and the second SI is cell or TRP specific SI.

19. The method according to claim 1, wherein in a case that a third condition is met, the first operation comprises: continuing performing the first RACH process.

20. The method according to claim 19, wherein that the third condition is met comprises at least one of the following:
that a RACH resource associated with a first RS is used in the first RACH process; or
that a RACH resource used in the first RACH process is coordinated and determined by the at least one SFN or an object in an SFN range, wherein
the first RS is an SFN specific RS.

21. The method according to claim 1, wherein before performing the first operation, the method further comprises:
obtaining a candidate RACH resource according to first information; and
performing the first RACH process according to the candidate RACH resource, wherein
the first information comprises at least one of the following: cell or TRP specific SI; SFN specific SI; a radio resource control RRC message; or a paging message.

22. The method according to claim 21, wherein the candidate RACH resource comprises at least one of the following: a RACH resource associated with a cell or TRP specific RS, or a RACH resource associated with an SFN specific RS.

23. The method according to claim 21, wherein performing the first RACH process according to the candidate RACH resource comprises:
selecting a third RACH resource from the candidate RACH resource according to second information; and
performing the first RACH process according to the third RACH resource, wherein
the second information comprises at least one of the following: a preset rule, a measurement result of a cell or TRP specific RS, or a measurement result of an SFN specific RS.

24. The method according to claim 1, further comprising:
performing a second operation in a case of moving in the at least one single frequency network SFN during execution of the first random access channel RACH process performed by the terminal, wherein
the second operation comprises at least one of the following:
receiving cell or TRP specific SI;
receiving SFN specific SI;
receiving a cell or TRP specific RS; or
receiving an SFN specific RS.

25. The method according to claim 1, further comprising:
receiving a cell or TRP specific RS according to third information, wherein
the third information comprises at least one of the following: a paging message, SI corresponding to a cell or a TRP, or SI corresponding to an SFN.

26. The method according to claim 2, wherein in a case that a high frequency range and a low frequency range are deployed for a network, the SFN specific cell comprises a cell in the low frequency range, and the cell or TRP specific cell comprises a cell in the high frequency range; or
in a case that the network comprises a satellite communication network, the SFN specific cell comprises a high altitude platform station HAPS cell or a high-earth orbit satellite cell, and the cell or TRP specific cell comprises a low-earth orbit satellite cell or a ground base station-covered cell.

27. A random access method, performed by a network side device and comprising:
performing a first operation in a case of moving in at least one single frequency network SFN during execution of a first random access channel RACH process performed by a terminal, wherein
the first operation comprises any one of the following:
continuing performing the first RACH process;
ending the first RACH process and starting to perform a second RACH process; or
ending the RACH process.

28. The method according to claim 27, wherein moving in the at least one SFN comprises any one of the following:
moving from a first object to a second object in a first SFN;
moving from a second SFN to a third SFN, and accessing, by the terminal, an SFN layer; or
moving from a third object in a fourth SFN to a fourth object in a fifth SFN, wherein
the object comprises any one of the following: an SFN specific cell, a cell or transmission reception point TRP specific cell, or a TRP.

29. The method according to claim 27, wherein performing the first operation comprises:
performing the first operation in a case that a reference signal RS sent by the network side device comprises an SFN specific RS.

30. The method according to claim 27, wherein the continuing performing the first RACH process comprises:
continuing performing the first RACH process according to a first RACH resource.

31. The method according to claim 30, wherein in a case that moving in the at least one SFN comprises moving from a first object to a second object in a first SFN, the first RACH resource meets any one of the following:
in a case that an RS sent by the network side device comprises a first RS and a second RS, and the first RS is not associated with a RACH resource, that the first RACH resource is any one of the following: a RACH resource corresponding to the second object or a RACH resource corresponding to the first object;
in a case that an RS sent by the network side device comprises a first RS and a second RS, and the first RS is associated with a RACH resource, that the first RACH resource is any one of the following: a RACH resource associated with a specific RS of the first SFN, a RACH resource corresponding to the second object, or a RACH resource corresponding to the first object; or
in a case that an RS sent by the network side device comprises only a first RS, and the first RS is associated with a RACH resource, that the first RACH resource is a RACH resource associated with a specific RS of the first SFN, wherein
the object comprises any one of the following: an SFN specific cell, a cell or TRP specific cell, or a TRP; and the first RS is an SFN specific RS, or the second RS is a cell or TRP specific RS.

32. The method according to claim 30, wherein in a case that moving in the at least one SFN comprises moving from a second SFN to a third SFN, and accessing, by the terminal, an SFN layer, the first RACH resource meets any one of the following:
in a case that an RS sent by the network side device comprises a first RS and a second RS, and the first RS is not associated with a RACH resource, that the first RACH resource is any one of the following: a RACH resource configured by using target system information SI in the second SFN or a RACH resource configured by using target SI in the third SFN; or
in a case that an RS sent by the network side device comprises a first RS, and the first RS is associated with a RACH resource, that the first RACH resource is any one of the following: a RACH resource associated with a specific RS of the second SFN or a RACH resource associated with a specific RS of the third SFN, wherein
the first RS is an SFN specific RS, or the second RS is a cell or TRP specific RS; and the target SI is SFN specific SI or cell or TRP specific SI.

33. The method according to claim 30, wherein in a case that moving in the at least one SFN comprises moving from a third object in a fourth SFN to a fourth object in a fifth SFN, the first RACH resource meets any one of the following:
in a case that an RS sent by the network side device comprises a first RS and a second RS, and the first RS is not associated with a RACH resource, that the first RACH resource is any one of the following: a RACH resource corresponding to the third object or a RACH resource corresponding to the fourth object;
in a case that an RS sent by the network side device comprises a first RS and a second RS, and the first RS is associated with a RACH resource, that the first RACH resource is any one of the following: a RACH resource associated with a specific RS of the fourth SFN, a RACH resource associated with a specific RS of the fifth SFN, a RACH resource corresponding to the third object, or a RACH resource corresponding to the fourth object; or
in a case that an RS sent by the network side device comprises only a first RS, and the first RS is associated with a RACH resource, that the first RACH resource is any one of the following: a RACH resource associated with a specific RS of the fourth SFN or a RACH resource associated with a specific RS of the fifth SFN, wherein
the object comprises any one of the following: an SFN specific cell, a cell or TRP specific cell, or a TRP; and the first RS is an SFN specific RS, or the second RS is a cell or TRP specific RS.

34. The method according to any one of claims 30 to 33, wherein the first RACH resource is configured by using any one of the following: the SFN specific SI, the cell or TRP specific SI.

35. The method according to claim 27, wherein starting to perform the second RACH process comprises:
starting to perform the second RACH process according to a second RACH resource.

36. The method according to claim 35, wherein in a case that moving in the at least one SFN comprises moving from a first object to a second object in a first SFN, the second RACH resource meets any one of the following:
in a case that an RS sent by the network side device comprises a first RS and a second RS, and the first RS is not associated with a RACH resource, that the second RACH resource is a RACH resource corresponding to the second object;
in a case that an RS sent by the network side device comprises a first RS and a second RS, and the first RS is associated with a RACH resource, that the second RACH resource is any one of the following: a RACH resource associated with a specific RS of the first SFN or a RACH resource corresponding to the second object; or
in a case that an RS sent by the network side device comprises only a first RS, and the first RS is associated with a RACH resource, that the second RACH resource is a RACH resource associated with a specific RS of the first SFN, wherein
the object comprises any one of the following: an SFN specific cell, a cell or TRP specific cell, or a TRP; and the first RS is an SFN specific RS, or the second RS is a cell or TRP specific RS.

37. The method according to claim 35, wherein in a case that moving in the at least one SFN comprises moving from a second SFN to a third SFN, and accessing, by the terminal, an SFN layer, the second RACH resource meets any one of the following:
in a case that an RS sent by the network side device comprises a first RS and a second RS, and the first RS is not associated with a RACH resource, that the second RACH resource is a RACH resource configured by using target SI in the third SFN;
in a case that an RS sent by the network side device comprises a first RS, and the first RS is associated with a RACH resource, that the second RACH resource is a RACH resource associated with a specific RS of the third SFN, wherein
the first RS is an SFN specific RS, or the second RS is a cell or TRP specific RS; and the target SI is SFN specific SI or cell or TRP specific SI.

38. The method according to claim 35, wherein in a case that moving in the at least one SFN comprises moving from a third object in a fourth SFN to a fourth object in a fifth SFN, the second RACH resource meets any one of the following:
in a case that an RS sent by the network side device comprises a first RS and a second RS, and the first RS is not associated with a RACH resource, that the second RACH resource is a RACH resource corresponding to the fourth object;
in a case that an RS sent by the network side device comprises a first RS and a second RS, and the first RS is associated with a RACH resource, that the second RACH resource is any one of the following: a RACH resource associated with a specific RS of the fifth SFN or a RACH resource corresponding to the fourth object; or
in a case that an RS sent by the network side device comprises only a first RS, and the first RS is associated with a RACH resource, the second RACH resource is a RACH resource associated with a specific RS of the fifth SFN, wherein
the object comprises any one of the following: an SFN specific cell, a cell or TRP specific cell, or a TRP; and the first RS is an SFN specific RS, or the second RS is a cell or TRP specific RS.

39. The method according to any one of claims 35 to 37, wherein the second RACH resource is configured by using any one of the following: the SFN specific SI, the cell or TRP specific SI.

40. The method according to claim 27, wherein in a case that a first condition is met, the first operation comprises: ending the RACH process.

41. The method according to claim 40, wherein that the first condition is met comprises at least one of the following:
that a RACH resource associated with a second RS is used in the first RACH process; or
that RACH resources configured by using second SI corresponding to different objects are different or independent, wherein
the second RS is a cell or TRP specific RS; the object comprises any one of the following: an SFN specific cell, a cell or TRP specific cell, or a TRP; and the second SI is cell or TRP specific SI.

42. The method according to claim 27, wherein ending the RACH process comprises at least one of the following:
stopping receiving an uplink message in the RACH process;
stopping sending a downlink message in the RACH process;
releasing a resource associated with the RACH process; or
stopping or resetting a timer and a counter associated with the RACH process.

43. The method according to claim 27, wherein in a case that a second condition is met, the first operation comprises: ending the first RACH process and starting to perform the second RACH process.

44. The method according to claim 43, wherein that the second condition is met comprises at least one of the following:
that a RACH resource associated with a second RS is used in the first RACH process; or
that RACH resources configured by using second SI corresponding to different objects are different or independent, wherein
the second RS is a cell or TRP specific RS; the object comprises any one of the following: an SFN specific cell, a cell or TRP specific cell, or a TRP; and the second SI is cell or TRP specific SI.

45. The method according to claim 27, wherein in a case that a third condition is met, the first operation comprises: continuing performing the first RACH process.

46. The method according to claim 45, wherein that the third condition is met comprises at least one of the following:
that a RACH resource associated with a first RS is used in the first RACH process; or
that a RACH resource used in the first RACH process is coordinated and determined by the at least one SFN or an object in an SFN range, wherein
the first RS is an SFN specific RS.

47. The method according to claim 27, wherein before performing the first operation, the method further comprises:
obtaining a candidate RACH resource according to first information; and
performing the first RACH process according to the candidate RACH resource, wherein
the first information comprises at least one of the following: cell or TRP specific SI; SFN specific SI; a radio resource control RRC message; or a paging paging message.

48. The method according to claim 47, wherein the candidate RACH resource comprises at least one of the following: a RACH resource associated with a cell or TRP specific RS, or a RACH resource associated with an SFN specific RS.

49. The method according to claim 47, wherein performing the first RACH process according to the candidate RACH resource comprises:
selecting a third RACH resource from the candidate RACH resource according to second information; and
performing the first RACH process according to the third RACH resource, wherein
the second information comprises at least one of the following: a preset rule, a measurement result of a cell or TRP specific RS, or a measurement result of an SFN specific RS.

50. The method according to claim 27, further comprising:
performing a second operation in a case of moving in the at least one single frequency network SFN during execution of the first random access channel RACH process performed by the terminal, wherein
the second operation comprises at least one of the following:
sending cell or TRP specific SI;
sending SFN specific SI;
sending cell or TRP specific RS; or
sending an SFN specific RS.

51. The method according to claim 27, further comprising:
sending a cell or TRP specific RS according to third information, wherein
the third information comprises at least one of the following: a Paging message, SI corresponding to a cell or a TRP, or SI corresponding to an SFN.

52. The method according to claim 28, wherein in a case that a high frequency range and a low frequency range are deployed for a network, the SFN specific cell comprises a cell in the low frequency range, and the cell or TRP specific cell comprises a cell in the high frequency range; or
in a case that the network comprises a satellite communication network, the SFN specific cell comprises a high altitude platform station HAPS cell or a high-earth orbit satellite cell, and the cell or TRP specific cell comprises a low-earth orbit satellite cell or a ground base station-covered cell.

53. A random access apparatus, comprising:
a first execution module, configured to perform a first operation in a case of moving in at least one single frequency network SFN during execution of a first random access channel RACH process performed by a terminal, wherein
the first operation comprises any one of the following:
continuing performing the first RACH process;
ending the first RACH process and starting to perform a second RACH process; or
ending the RACH process.

54. The random access apparatus according to claim 53, wherein moving in the at least one SFN comprises any one of the following:
moving from a first object to a second object in a first SFN;
moving from a second SFN to a third SFN, and accessing, by the terminal, an SFN layer; or
moving from a third object in a fourth SFN to a fourth object in a fifth SFN, wherein
the object comprises any one of the following: an SFN specific cell, a cell or transmission reception point TRP specific cell, or a TRP.

55. A random access apparatus, comprising:
a fourth execution module, configured to perform a first operation in a case of moving in at least one single frequency network SFN during execution of a first random access channel RACH process performed by a terminal, wherein
the first operation comprises any one of the following:
continuing performing the first RACH process;
ending the first RACH process and starting to perform a second RACH process; or
ending the RACH process.

56. The random access apparatus according to claim 55, wherein moving in the at least one SFN comprises any one of the following:
moving from a first object to a second object in a first SFN;
moving from a second SFN to a third SFN, and accessing, by the terminal, an SFN layer; or
moving from a third object in a fourth SFN to a fourth object in a fifth SFN, wherein
the object comprises any one of the following: an SFN specific cell, a cell or transmission reception point TRP specific cell, or a TRP.

57. A communication device, comprising a processor, a memory, and a program or instructions stored in the memory and executable on the processor, the program or instructions, when executed on the processor, implementing steps of the random access method according to any one of claims 1 to 26, or implementing steps of the random access method according to any one of claims 27 to 52.

58. A readable storage medium, storing a program or instructions, the program or instructions, when executed on a processor, implementing steps of the random access method according to any one of claims 1 to 26, or implementing steps of the random access method according to any one of claims 27 to 52.

59. A chip, comprising a processor and a communication interface, the communication interface being coupled to the processor, and the processor being configured to run a program or instructions of a network side device to implement the random access method according to any one of claims 1 to 26, or implement the random access method according to any one of claims 27 to 52.

60. A software product, stored in a non-volatile storage medium and configured to be executed on at least one processor to implement steps of the random access method according to any one of claims 1 to 26, or implement steps of the random access method according to any one of claims 27 to 52.

61. A communication device, configured to perform the random access method according to any one of claims 1 to 26, or perform the random access method according to any one of claims 27 to 52.
